(19) Europäisches Patentamt
European Patent Office
Office européen des brevets

(11) Publication number: **0 048 593**
**A1**

# (12) EUROPEAN PATENT APPLICATION

(21) Application number: **81304263.7**

(22) Date of filing: **16.09.81**

(51) Int. Cl.³: **F 16 H 25/06**

(30) Priority: **18.09.80 GB 8030169**
**02.01.81 GB 8100065**
**23.04.81 GB 8112626**

(43) Date of publication of application:
**31.03.82 Bulletin 82/13**

(84) Designated Contracting States:
**CH DE FR IT LI**

(71) Applicant: **PRECISION MECHANICAL DEVELOPMENTS LIMITED**
**Normandy House**
**St. Helier Jersey, Channel Islands(GB)**

(84) Designated Contracting States:
**CH IT LI**

(71) Applicant: **GAUNTGLEN LIMITED**
**14 Dominion Street**
**London EC2N 4RJ(GB)**

(84) Designated Contracting States:
**DE FR**

(72) Inventor: **Carden, John Craven**
**P.O. Box 8159 N**
**Nassau(BS)**

(74) Representative: **Rennie, Ian Malcolm et al,**
**BOULT, WADE & TENNANT 27 Furnival Street**
**London EC4A 1PQ(GB)**

(54) Motion transmitting devices.

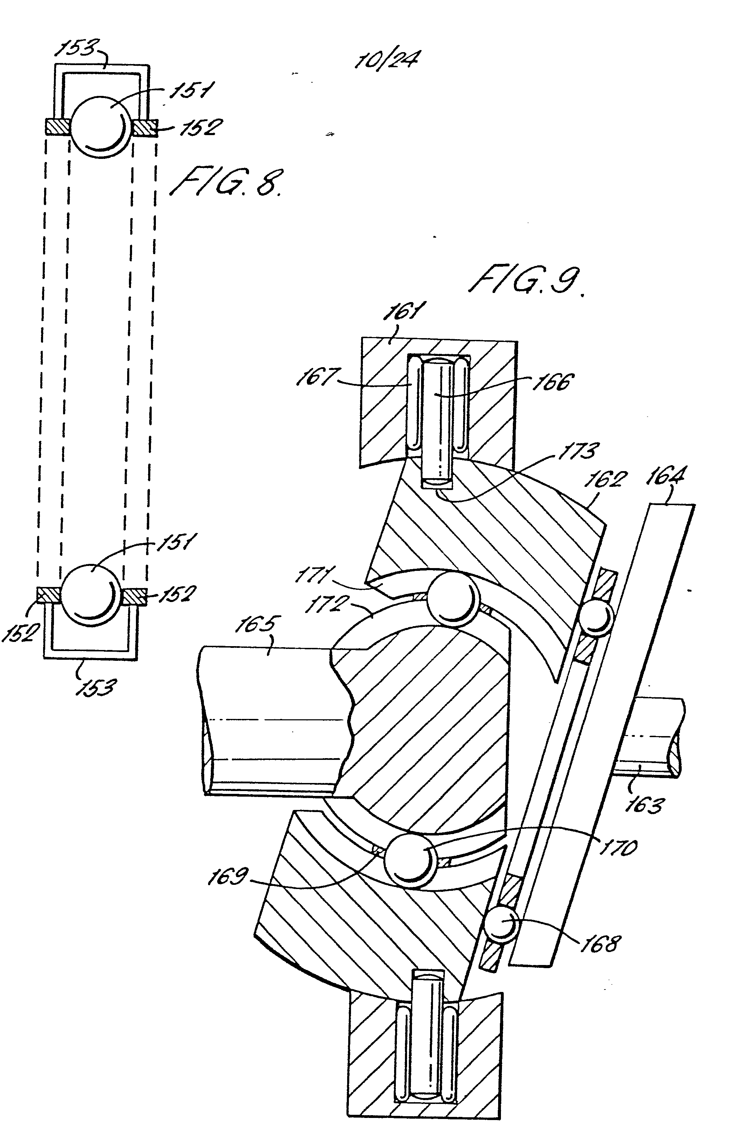

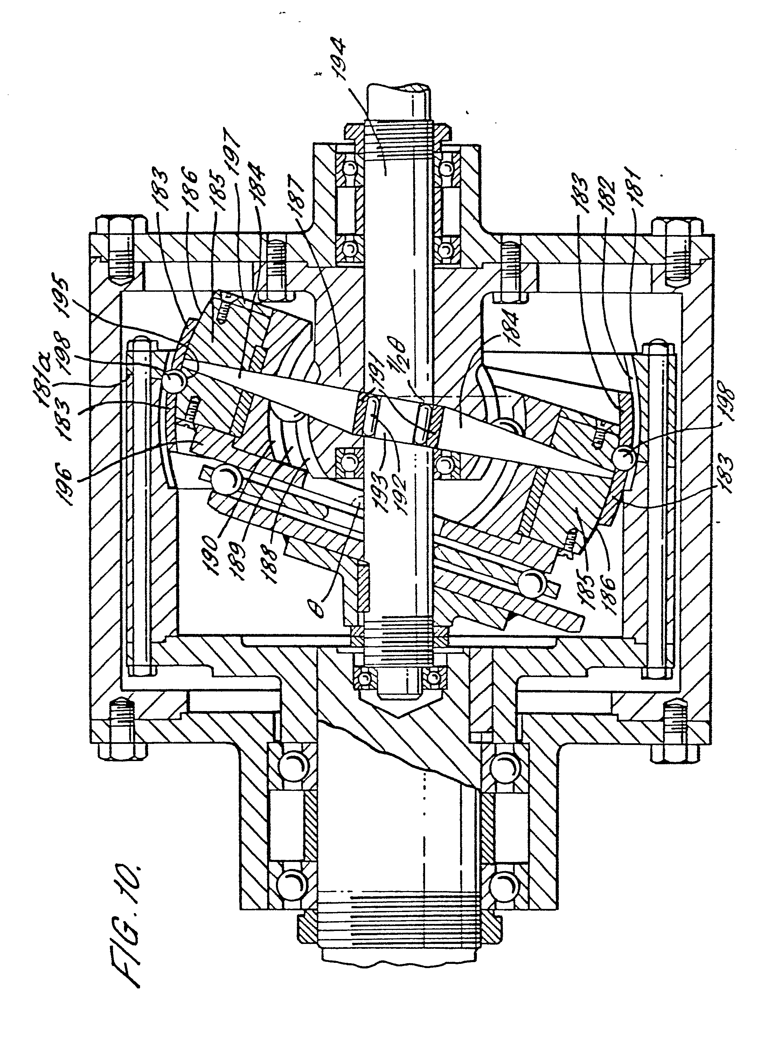

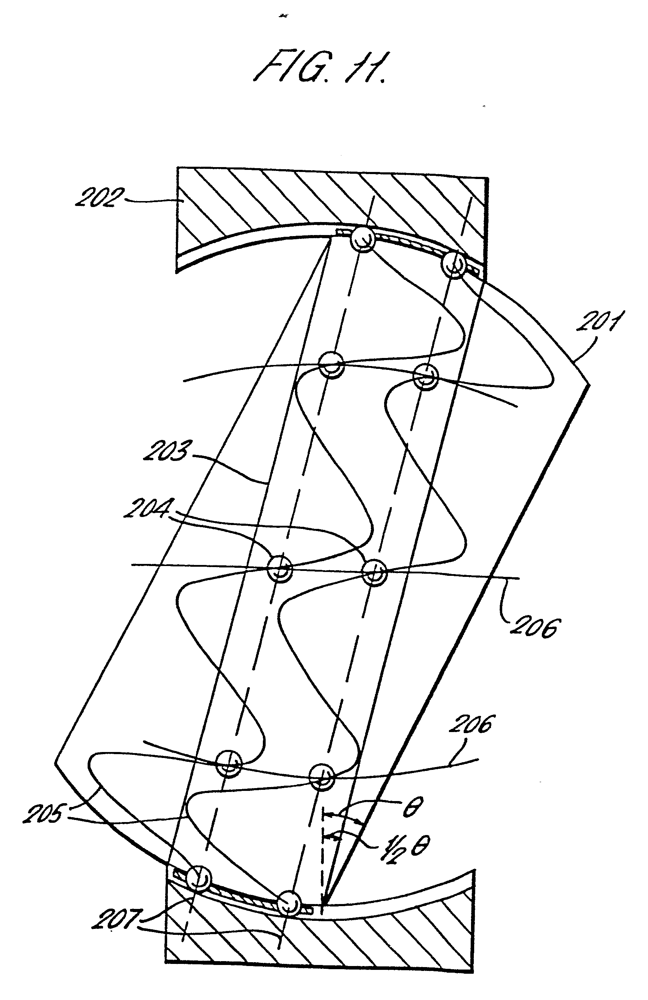

(57) A motion transmitting device comprises a male member (47) and a female member (57) with meshing elements between them. In a simple construction shown in Figure 4, the meshing elements may be $n$ balls (54) where $n$ is a multiple of four, the balls meshing in a wavy groove (55) having $(n - 1)$ or $(n + 1)$ waves in the male member and the balls engaging also in $n$ arcuate grooves (56) in the female, the male member (47) being swashed by swashing means (45,46) with respect to the female member and the balls lie in a median plane which preferably is at an angle to the swashing plane which is half the angle of swash. More complex configurations are described using two sets of wavy grooves, or using two concentric devices or using bearingly mounted spindles in said balls. Arrangements are also described for forming a variable angle coupling and also for forming a torque divider.

FIG 3.

.../...

FIG. 4.

-1-

"MOTION TRANSMITTING DEVICES"

This invention relates to motion transmitting devices for effecting speed changing or torque conversion between a rotary input and a rotary output.

In conventional gearing, the torque is transmitted through one tooth at a time.   In U.S.Patents Nos. 4,023,440 and 4,194,415 and also in U.K.Patent Application No.8,011,061, there are described means by which up to one quadrant or 25% of the teeth in a gear pinion can be kept in driving engagement in a motion transmitting device.   These devices have become known as "Quadrant Drives".   Also the aforementioned U.S. Patent No.4,194,415 and U.K.Patent Application No.8,011,061 describe how it is also possible to get pure rolling motion between all the drivingly engaged parts of the whole motion transmitting device.

It is an object of the present invention to provide a motion transmitting device forming a significant advance over the devices mentioned above by a still

-2-

further increase in the proportion of meshing elements in driving engagement. As will be apparent from the following description, it is possibe in some constructions to obtain a 360° or 100% engagement of all the meshing elements that are drivingly engaged in the motion transmitting device and to have these meshing elements engaged all of the time whilst also producing a change of speed or torque conversion between the input and the output. In preferred embodiments of the invention, all of the meshing elements that are engaged all of the time are connected by pure rolling motion, in order to keep friction to a minimum. By having 100% of the meshing elements engaged 100% of the time, it will be shown that enormous increases in torque capacity become possible.

In order to obtain 100% engagement of all the meshing elements 100% of the time, the present invention makes use of two features. Firstly, one of the torque transmitting elements is male and the other female, so that one will embrace the other. Secondly, the internal diameter of the female element is effectively equal to the external diameter of the male element. Unless the above two conditions are catered for, it is not possible to get continuous 100% contact about the circumference of the respective elements.

-3-

The above requirements at once produce a dilemma, since in order to achieve a change of speed, or torque conversion, it is necessary to have a difference in diameters between the meshing elements.

In the prior patent specifications referred to above, in order to achieve multi-tooth engagement, each individual torque transmitting element in the speed changing devices only move in one plane with two degrees of freedom of motion. If a speed changing device can be designed in which some of the meshing elements are capable of moving in two planes with three degrees of freedom of motion, then it is possible for all the torque transmitting meshing elements to be drivingly engaged all of the time. A well-known mechanical device which is inherently capable of three degrees of freedom of motion in two planes is a swash plate. Even if the swash plate is locked in order to prevent it from rotating about the axis of the drive shaft which is causing it to swash, any point on the surface of the swash plate will describe a path on the surface of a sphere, which path is composed of three degrees of freedom of motion in two planes. At a point on the surface lying on a normal to the axis of the drive shaft causing the swashing motion, if the axis of the shaft passes through the centre of the sphere

-4-

and if the normal passes through the centre, this path is a very elongate spheroidal figure of eight. The proportions of this figure of eight are a function of the angle of swash. As the generating point is moved away from the position on the normal, this spheroidal figure of eight gradually changes and eventually becomes a circle when the generating point is on the axis of the drive shaft. These shapes will always be generated for every revolution of the drive shaft which causes the swash plate to swash.

It is well known in constant velocity joints to make use of balls as movable meshing elements between a male and a female member. Such joints however provide unity speed ratio. It has been proposed in U.S. Patent Specification No. 2559093 of Rzeppa to provide an angle coupling for coupling shafts in a fixed angular relationship, more particularly for connecting an obliquely arrayed steering wheel for a motor vehicle with a stem extending through a vertical post and which makes use of balls located in sockets in a part-spherical female member, the balls engaging also a zig-zag groove on a part spherical meshing member to give a non-unity velocity ratio. However the sockets in the part spherical female member hold the balls in position so that this member is a cage for the balls as well as a torque transmitting member, the balls reacting against

-5-

the walls of the sockets in the cage.    This results in a sliding or skidding motion between the balls and the walls of the sockets.    Pure rolling motion is not possible and this device will not operate efficiently at high speed.

According to this invention, motion transmitting apparatus comprises a male member, a female member, swashing means and a plurality of freely rotatable meshing elements between part-spherical surfaces of the male and female members, the meshing elements engaging in an endless wavy groove in a part-spherical surface of at least one of said members, which groove is arranged so that relative swasing motion of the male and female members causes the meshing elements to precess along the wavy groove, whereby torque is transmissible between said members through said meshing elements, said meshing elements being freely rotatable in the other member or in rolling engagement therewith.

In a preferred form of construction, the meshing elements are balls and, in this case, said wavy groove must have a number of waves which differs by unity from a multiple of four.

In an alternative arrangement, the meshing elements are spindles journalled in roller bearings in said other member, and, in this case, the wavy groove on said one member must have an odd number of waves.

If balls are employed, they may be arranged to roll each in a separate arcuate groove on the part-spherical surface of said other member or the balls may be arranged to roll in an endless wavy groove extending around the part-spherical surfaces of said other member and having a number of waves also differing by unity from the aforesaid multiple of four, the numbers of waves in the grooves on the two members differing by two.

In accordance with one aspect of the present invention, a motion transmitting device comprises

(a) swashing means

(b) meshing means in the form of a series of independently movable meshing elements whose centres are constrained to remain on the circumference of a swashing circle

(c) swash plate means formed with a circumferential wavy groove, said groove being partially complementary to said meshing elements

(d) a series of individual movement-limiting means, incorporated in a datum means, wherein said swashing means is disposed to cause said meshing elements to precess around said circumferential wavy groove in said swash plate means, each of said individual movement-limiting means guiding in captive dependency always the same individual meshing element within specific limits of arcuate oscillating motion, said

-7-

arcuate oscillating motion of the centres of said individual meshing elements being in two degrees of freedom of linear motion relative to each of said individual movement-limiting means, but being in three degrees of freedom of linear motion relative to said swash plate means.

According to another aspect of the invention, a motion transmitting device comprises

(a) an input, an output and datum means, one of which is a first shaft, another of which is a second shaft and the third of which is a frame, said first and second shafts being separately relatively rotatable with respect to the frame about a common axis,

(b) a male member and a female member, at least one of which members is angularly movable about orthogonal axes which are orthogonal to and intersecting said common axis at a common centre,

(c) one of said male and female members being coupled to said first shaft by first coupling means and the other of said male and female members being coupled either to said frame or to said second shaft by second coupling means,

(d) the coupling means for the or each of said male and female members which is angularly movable about orthogonal axes including swashing means,

The number of balls or other meshing elements is preferably $\underline{n}$ although the device will operate if one or some are omitted. It is desirable to use the maximum number $\underline{n}$ of balls to ensure the maximum torque-handling capacity.

The meshing element in the torque converter described above may be balls or like elements between a male member and a female member. In certain of the embodiments, as will be described in the following specification, it is possible to obtain pure rolling motions of balls in axial grooves in the female member and in circumferential wavy grooves in the male member, the balls constituting the coupling between the male and female members, which members may be the input and output. The male and female members typically are part-spherical.

In specific embodiments, this pure rolling motion is achieved in two ways. Firstly because the distance of the path along which the ball has to follow between crest and hollow of a wavy groove is greater, since the flank of the wave is at an angle, than the axial distance of the grooves, but since the wave is on the male and therefore the contact point of the ball is radially further in, yet the contact point of the ball in the grooves is radially further out, these two rolling distances can be equated.

Secondly, because the above is only an average condition since the points on the wave, they are points on the surface of a sphere, are points which at an instantaneous moment in time are travelling in the path of a great circle although constantly changing the choice of a great circle. The flank of the wave is not itself a median line on the sphere but is a complex wave form made up of an infinite number of great circles. A second instantaneous equalisation of rolling velocities of the balls when in contact with the male and female elements can be achieved, if necessary, by altering the cross-section of the grooves in the male and female elements thus causing the balls to rise and fall in the grooves to alter the effective radial point of contact thus altering the ratio and thus achieving equal constant instantaneous rolling velocities of the balls on the surfaces of the male and female elements.

-12-

The torque converters in some specific embodiments to be described are torque converters having a high torque multiplication ratio, which may be a step up or step down ratio. This may be achieved by holding one of said male or female elements fixed, the other one of these two elements being either the input or output to drive or be driven by the third element of the torque converter.

The present invention includes within its scope constructions in which the male and female elements constitute the input and output. In this case a low torque multiplication ratio would be obtained. By mounting these elements directly one on the input and the other on the output, the device can be used for coupling two shafts at an angle to one another. Because pure rolling motion of the balls can be obtained as described above, it becomes possible to use the device as a high torque high efficiency and high speed fixed angle drive and low ratio torque converter. It is not possible to obtain pure rolling motion in a conventional constant velocity universal joint because the point of rolling contact of the ball on the male element is radially further in than the point of contact on the female, which is radially further out and, in order to get a constant velocity ratio, the median line of the balls must swash at half the angle of deflection of the joint. This swash angle does not correspond to the condition giving the speed at which the balls wish to precess in the epicyclic sense in, for example, a ball thrust bearing. Hence, the rolling distances are different and slipping will occur, the balls always having to travel through a median line which is half the deflection angle of the joint in order to preserve constant velocity. The result is that, except for quite small deflection angles, because of this slippage and skidding of the balls, considerable heat is generated in the joint particularly at high speeds and high deflection angles. This drawback is avoided in the construction of the present invention.

The present invention includes within its scope a motion transmitting device comprising a constant velocity speed changing drive coupling having a constant deflection angle between its input and its output and where the constant speed of the output is different from the constant speed of the input, said drive coupling consisting of a male and female element, said female element having a plurality of axial grooves on the internal part-spherical surface of said female element, said number of axial grooves being even, the same number of independently movable meshing elements, said number being divisible by four, said male element having a circumferential wavy groove disposed about the external surface of a part sphere of said male element, the number of said waves on said circumferential wavy groove being odd and either one more than or one less than said number of independently movable meshing elements, said meshing elements engaging in said axial grooves and said circumferential wavy groove simultaneously, thereby connecting said male and female elements, said male and female elements also being said input and output.

Since one of the male and female elements constitutes the input and the other the output, this device is thus a low ratio torque converter in which the input and output are at a fixed angle to one another. It is readily possible, in practical embodiments, to make this angle to be any desired angle from say twenty degrees up to say forty degrees or more.

A motion transmitting device as described above thus forms a constant velocity fixed angled joint which, as previously explained, is a high speed high torque joint of high efficiency.

If the low speed ratio of the joint is not acceptable then two such joints may be coupled back to back. The two devices may be similar having equal but opposite speed ratios so that the output speed of the assembly is equal to the input speed or alternatively the two devices may be arranged so that their speed ratios are multiplied. Two devices so coupled may be arranged so that the output axis is parallel to the input axis or so that the angles between the input and output of each device are additively combined to give a required overall angle between the input to the first device and the output from the second.

-15-

Intermediate angles may be obtained by relative rotation of one joint with respect to the other about the axis of coupling between the two joints.   As will be explained later, the length of this coupling may be made effectively zero by making the two joints concentric.

The invention furthermore includes within its scope a motion transmitting device including

(a) meshing means in the form of a series of independently movable meshing elements whose centres are constrained to remain on the circumference of a swashing circle relative to a male and a female element,

(b) said male element being formed with a circumferential wavy groove, said groove being partially complementary to said meshing elements,

(c) a series of individual movement-limiting means, incorporated in a female element, whereby said meshing elements are caused to precess around said circumferential wavy groove in said male element, wherein said male and female elements rotate relative to each other at different speeds and at different intersecting axes, each of said individual movement-limiting means guiding in captive dependency always the same individual meshing element within specific limits of arcuate oscillating motion relative to said female element,

0048593

-16-

said arcuate oscillating motion of the centres of said individual meshing elements being in three degrees of freedom of linear motion relative to said male element, one of said male and female elements being the input and the other the output.

The meshing elements conveniently are balls. In one preferred construction, said female element has a plurality $n$ of predetermined stations evenly spaced on a plane at right angles to the axis of rotation of the female element, where $n$ is an integral multiple of four, any number of or all of said stations being the site for an arcuate concave groove disposed radially about and on median lines of an internal surface of a part sphere, which grooves constitute said movement-limiting means and wherein said meshing elements are balls partly recessed in said arcuate concave grooves, said male element being in the form of a part-sphere incorporating said circumferential wavy groove, said balls constituting said meshing elements being partly recessed in said circumferential wavy groove, said male and female elements rotating differentially and at relatively inclined but intersecting axes, the number of waves on said circumferential wavy groove being $(n+1)$ or $(n-1)$, whereby said balls are caused to precess around said circumferential wavy groove, thereby creating a predetermined fixed ratio for said differential rotation.

In the devices described above, the torque conversion is achieved by the oscillating motion of the swash plate in the axial plane. The combination of features described above will be referred to hereinafter as an Axial Wave Drive unit. In specific examples, there is provided an input, an output and data means, one of which is a first shaft and another of which is a second shaft and the third of which is a frame, said first and second shafts being separately relatively rotatable with respect to the frame about a common axis. For this purpose, the examples have included a coupling, such as for example, a constant velocity universal joint as a device that brought the swashing rotating output back to the axis of the drive or, in the case where the swashing element is not rotating, the constant velocity universal joint is used to lock it to earth. With high deflection angles of constant velocity joints, such joints however become highly inefficient so that the efficiency of the axial wave drive unit in torque conversion is dissipated or partially dissipated by the provision of the constant velocity joint to bring the output drive back to the desired axis.

This problem can be overcome by the use of a second axial wave drive unit as the coupling to bring the output back to a desired output axis.

The present invention, thus further includes within its scope a motion-transmitting device comprising a first and a second axial wave drive unit as described above, said second axial wave drive unit being arranged to bring the drive from the swashing element of the first axial wave drive unit to a rotatable output element.

This rotatable output element may readily be made aligned with an input element to the first axial wave drive unit. The torque or speed changing ratio of the two axial wave drive units may be combined to give a higher ratio than the individual ratios or combined to give a lower ratio.

Conveniently the two axial wave drive units, which each have male and female elements, are made concentric with the female element for the inner unit having meshing elements engaging a male element of the inner unit, the female element of the inner unit constituting the male of an outer unit and having separate meshing elements engaging in a female of the outer unit. In such a construction it is convenient to make the unit with the greater number of meshing elements the outer unit.

In the two-stage arrangement, both stages can be simplex or both can be compound or one can be simplex and the other compound.

It is possible in any of the constructions described to use a plurality of wavy grooves, in which case some are asymmetric. Such an asymmetric wavy groove may be envisaged as a sine wave superimposed on a line of latitude of the earth away from the equator. Because of the spherical nature of the earth the shape on the north side of the line of latitude must differ from the shape to the south. The peaks of the circumferential wavy grooves may be machined away down the wave to the points where there is sufficient material to provide adequate strength between the flanks.

It will be appreciated that, with this two-stage construction, a wide range of speed ratios can be obtained by choice of the speed ratios for the individual stages by choice of addition (multiplication) or subtraction (division) of the speed ratios of the two stages.

Thus considered from another aspect the invention includes within its scope a motion-transmitting device comprising

(a) an input, an output and datum means, one of which is a first shaft, another of which is a second shaft and a third of which is a frame said first and second shafts being separately relatively rotatable with respect to the frame;

(b) a first axial wave drive unit having a male member and a female member, at least one of which members is angularly movable about orthogonal axes which are orthogonal to and intersecting said common axis at a common centre;

(c) one of said male and female members of said first axial wave drive unit being coupled to the first shaft by first coupling means and the other of said male and female members being either the frame or coupled to a second axial wave drive unit by second coupling means;

(d) the coupling means for the or each of said male and female members of the first axial wave drive unit including swashing means;

(e) a plurality of meshing elements between the male and female members, said meshing elements being located on one of said members by a circumferential guide having waves, the number of waves being $(n - 1)$ or $(n + 1)$ where $n$ is an integral multiple of four, and said meshing elements being constrained by the other of said members to be each at any or all of the respective ones of a plurality of locations;

(f) said locations (i) being points arcuately spaced $\frac{360}{n}$ degrees apart on a part-spherical surface around said common centre, or (ii) being guides along arcs of median lines with a part-spherical surface about said common centre, which median lines pass through said points, or (iii) being wavy circumferential guides of the same wave amplitude as the waves of said one member with the median lines of the waves passing through said points, each wavy circumferential guide extending around a part-spheroid of said other member, the number of waves around the circumference being $(n + 1)$ or $(n - 1)$ according as the number of waves on said one member is $(n - 1)$ or $(n + 1)$ so as thereby to differ by two therefrom, whereby the meshing elements form a coupling between the male and female members causing one to precess relative to the other with simultaneous relative swashing motion;

(g) the second axial wave drive unit being concentric with the first axial wave drive unit.

-21-

In the following description, reference will be made to the accompanying drawings in which:-

Figure 1(a) and 1(b) are schematic representations of grooves in a female stator and in a male rotor;

Figure 2 is a diagram similar to parts of Figures 1(a) and 1(b) but illustrating, at 2(a), a construction having a stator with eight grooves and a rotor with seven waves, at 2(b) a stator with eight grooves and a rotor with nine waves and, at 2(c) a stator with nine waves and a rotor with seven waves;

Figure 3 is a diagram showing a male swash plate and illustrating a co-operating female stator drawn in male configuration·

Figure 4 is a sectional view showing the general arrangement of one construction of torque converter:

Figure 5 is a diagram illustrating grooves on part of another construction of male swashing element and female stator:

Figure 6 is a sectional elevation illustrating a torque converter where both the male rotor and female stator swash by the same degree but in opposite directions:

Figure 7 illustrates a drafting machine for generating the wave form used in circumferential wavy grooves such as are employed in embodiments of the invention:

Figure 8 illustrates a ball cage which may be used in some embodiments of the invention:

-22-

Figure 9 illustrates a torque converter having spindles instead of balls as meshing elements;

Figure 10 illustrates another embodiment of torque converter;

Figure 11 is a explanatory diagram illustrating the provision of a plurality of wavy grooves;

Figure 12 is a diagram for explaining how the depth of opposing grooves in male and female members may be varied to reduce the differences in rolling velocities in the two grooves;

Figures 13, 14, 15, 16 and 17 are diagrams illustrating different embodiments of motion transmitting couplings;

Figure 18 is a diagrammatic sectional view of yet another form of motion transmitting coupling.

Figures 19 to 24 illustrates further embodiments; and

Figure 25 is an explanatory diagram.

The simplest way to explain the invention is to compare the device with a large constant velocity universal joint. Such a constant velocity universal joint has a male and a female element. Let us assume that the female element is the stator and that it has sixteen grooves in it with sixteen balls, one in each groove and let us assume that instead of sixteen grooves on the male element, a continuous groove is cut about the circumference of the male element and that there are fifteen waves imposed on this groove of equal amplitude to the length of the axial grooves in the female element. This provision of a wavy groove with the number of waves differring from the number of balls is, or course, quite different from the constructions employed in conventional constant velocity joints.

If it were possible, and later in the text it will be shown that it is possible, for the sixteen balls to engage the fifteen waves in the groove of the male element, then, every time the male element was swashed through one revolution, the male element would rotate 1/15th of a revolution.

-23-

As in a conventional constant velocity (CV) joint, the balls will swash by half the angle of swash of the male element. If there is a cage for the balls, it too will swash by this half angle. In order to get the male element to rotate, as described above, the male element must be swashed by an angle which will cause the balls at their maximum angle of swash to reach the peaks of the waves on the wave groove on the male element, so as to enter the next wave.

Since the sixteen balls cannot precess in the grooves in the female stator and are trapped there, the balls have to precess relative to the male swashing rotor by 1/15th of a revolution for every input revolution of the drive shaft which causes the male element to swash. Thus a speed reduction or torque conversion of 15:1 is obtained.

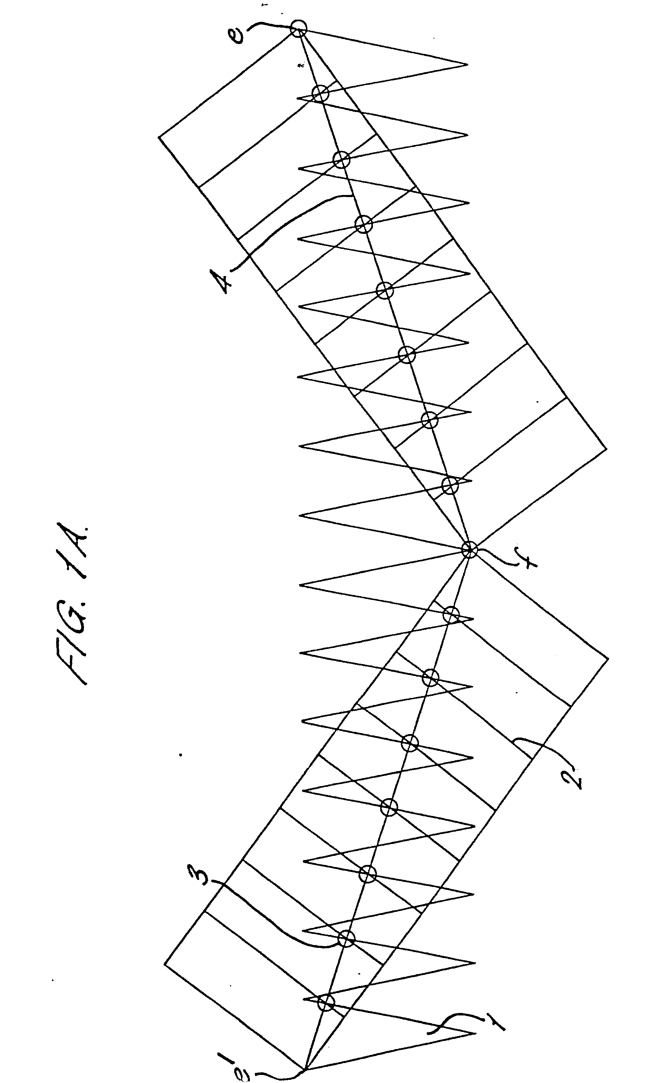

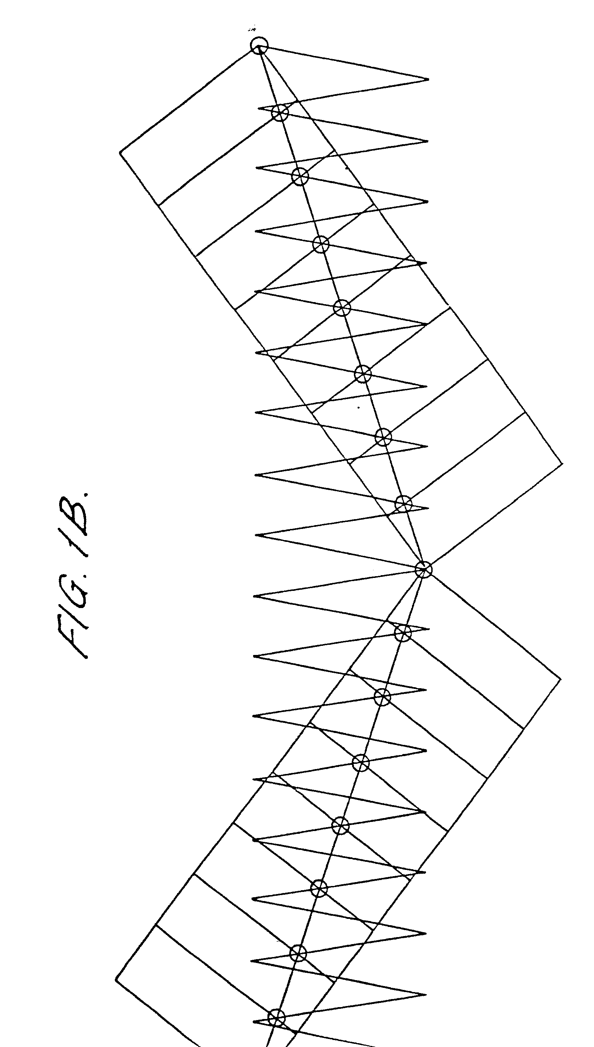

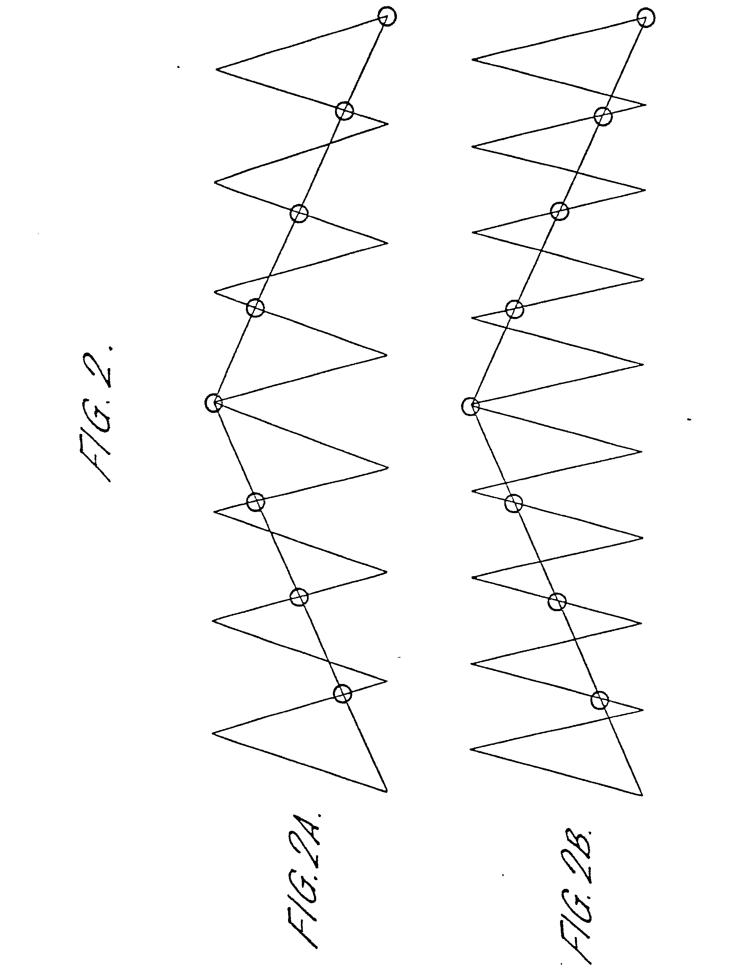

In Figure 1(a), the lines 1 show the fifteen waves on the rotor, the lines 2 represent the sixteen grooves on the stator, and the circles 3 represent the sixteen balls. Clearly, ignoring the cage in a CV joint, the internal surface of the female stator is the internal surface of a part sphere and also the external surface of the male rotor is the external surface of a part sphere.

In Figure 1(ā), in order to show on a two dimensional surface that which is happening in a three dimensional condition, the schematic representation is distorted in view of the necessary delineation of the lines in two planes. However, this delineation does not alter the proof. Thus the zig-zag line 1 represents the wavy groove, with fifteen waves, which is cut on the rotor. The use of a zig-zag line with straight sections is a simplification which does not affect the basic explanation now to be given. The exact nature of the waveform will be discussed later but in many preferred embodiments, it is a sinusoid on the surface of a sphere. The straight lines 2 represent the sixteen grooves in the stator. The circles 3 represent the sixteen balls. The line 4 represents the median line of the balls which is half the angle of swash of the angle of the grooves represented by the lines 2 . Point e , e' and f represent the maximum points of the angle of swash of both the male rotor and the balls in their cage. In other words e - f is the first 180$^\circ$ and f - e' is the next 180$^\circ$. The spherical surfaces having been delineated in both planes, no ball has been shown at e' since it is in fact coincident with e when brought back to a sphere.

From this schematic diagram, it becomes apparent that sixteen balls will mate with fifteen waves perfectly. The balls phase perfectly on the median line and each ball progresses along each wave and, as a result, precesses

-25-

about the male rotor causing the rotor to rotate since the balls are trapped in the grooves of the female stator.

Figure 1(b) is a diagram, similar to Figure 1(a), but illustrating the condition where there are seventeen waves and sixteen grooves and balls. It will be seen that the intersections are on the opposite flanks compared with Figure 1(a) and thus the rotation would be reversed. In this arrangement, the ratio is 17:1.

So with an odd number of waves, there is always an even number of balls that can intersect on the correct median line. The number of balls always is one more or one less than the number of waves. This is a very important teaching to which we shall return later.

It is important to realise that there must always be an odd number of waves and an even number of balls. Careful examination of Figures 1(a) and 1(b) demonstrates this. Since each half of the swashing rotor is moving axially in the opposite direction to the other half at any instant in time, it must be arranged that the balls in each half react on the opposite flank of the waves; otherwise one half set of balls will be trying to precess about the rotor in the opposite direction to the other half.

By having an odd number of waves and an even number of balls, it is possible to have each half set of balls acting on the opposite flank of the wave. Since each half of the swash plate is moving axially in the opposite direction to the other at any instant, this double reversal causes all of the balls to be precessing in the same direction around the rotor.

An important teaching is apparent from the above. As mentioned earlier, when the number of balls is one less than the number of waves the reaction of the ball is on the opposite flank compared with the case when there is one more ball than there are waves. Thus the direction of rotation of the rotor is governed in accordance with which flank the ball reacts.

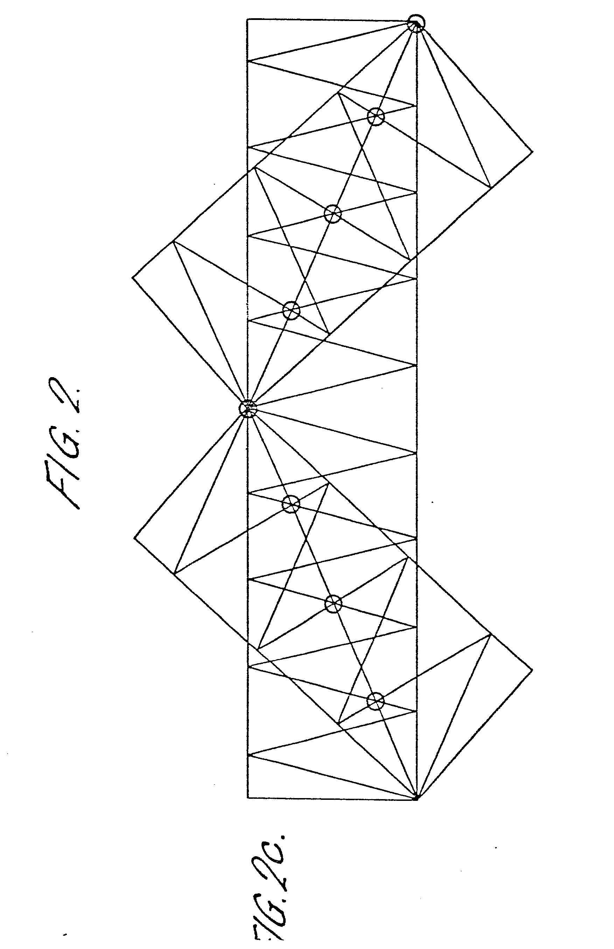

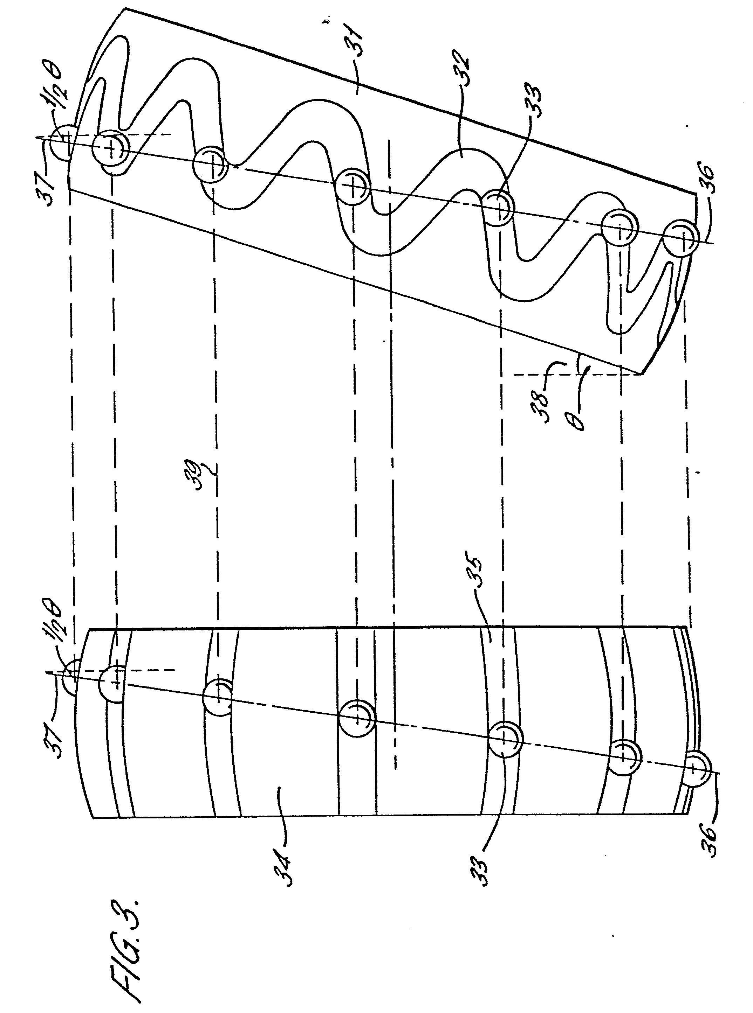

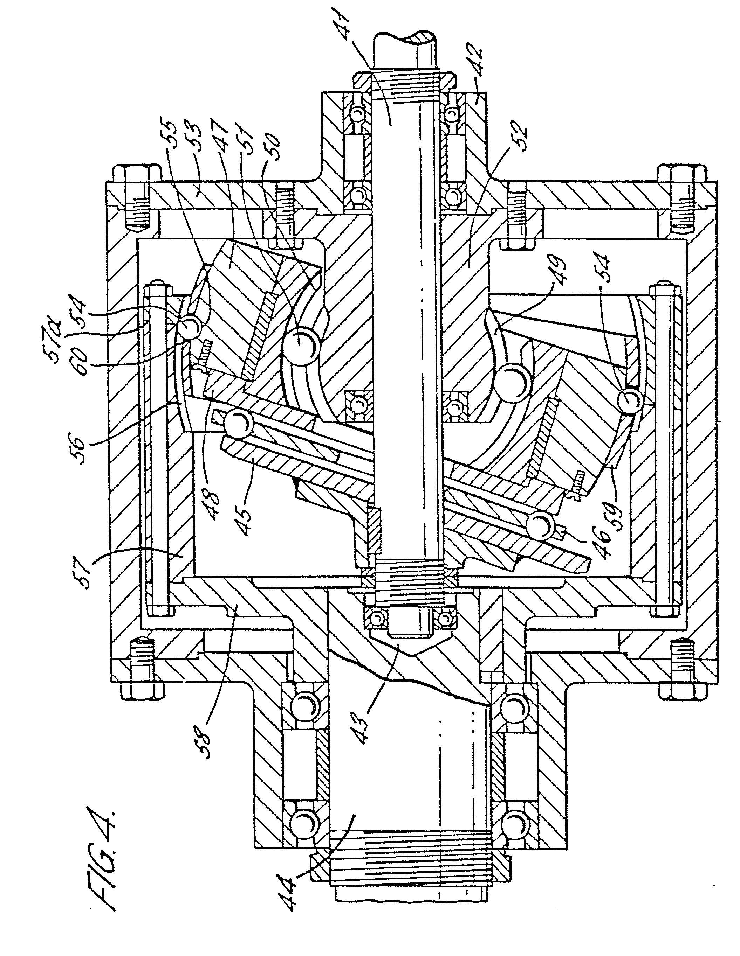

Figures 2(a) and 2(b) are for explaining the effects of changing the numbers of grooves in the stator and waves on the rotor. In Figure 2(a) there is represented a stator with eight grooves and balls and a rotor with seven waves on the circumferential groove. Figure 2(b) represents a stator with eight grooves and eight balls and a rotor with nine waves on the circumferential groove on the rotor.

Figures 2(a) and 2(b) individually may be considered as representing simplex constructions. It will be seen that even though in one case there are seven waves and in the other nine waves, the positions of the eight balls are identical in each case. Because the positions are identical, the duplex or compound construction is possible. If now, instead of having eight grooves in the stator there is a circumferential groove on the stator, with seven waves on it and if, on the rotor, there is a circumferential groove with nine waves on it, from what has been shown above, the two elements can be connected by eight balls. This teaching is also of the utmost importance.

In the above described compound unit with seven and
nine waves, as the rotor is swashed for every
complete swash, the balls have to precess 1/9th of a revolution
relative to the stator.   At the same time that this is going
on,the balls have had to precess 1/7th of a revolution relative
to the rotor, but in the opposite direction relative to the
rotor since the balls are reacting on the same flank of the
respective wave to that on the stator, but travelling in the
opposite direction.   Clearly something has to give.   The
rotor turns to compensate for the difference.   This angular
difference in this case is $\frac{1}{7} + \frac{1}{9} = \frac{9 + 7}{63} = \frac{1}{3.9375}$ of a
revolution.   Fig.2c is a delineated schematic drawing of
this situation.

So without any increase whatsoever in the number of
moving parts, the speed-changing ratio or torque multiplication
factor can be dramatically reduced, yet still retaining a
large number of balls to transmit very large amounts of torque.

In conventional CV joints a cage is necessary to keep
the balls on a true median line at all times.   One of the
problems   is   that,regardless of the deflection angle of
the joint, twice every revolution, each groove in turn in the
male and female elements become parallel and at this point
form a perfect tunnel down which the ball can roll.   Should
this happen, the joint will jam at once.   The cage prevents this happening. Also because of the violent axial shock loads imposed on CV joints, particularly in automotive applications on front wheel drive vehicles, it is important to have the cage keep the balls on a true median line at all times.

The simplex torque converter described above can be arranged so that the grooves in the female never become parallel with the wavy groove in the rotor. This is because the angle of the wave relative to the grooves in the stator can always be made greater than the angle of swash. Similarly in a compound or duplex torque converter, it can be ensured that the grooves in the female are never parallel to the grooves in the male. So in the present torque converter, the cage could theoretically be dispensed with.

A major operating advantage of the torque converter over a CV joint is that the deflection (swash) angle is always constant and is known. Because of this the angle of swash of the cage and balls is also constant and known. It can be made half the angle of swash of the rotor. In view of this it becomes possible to positively swash the cage (if provided) as well as the rotor. This is very attractive since one no longer has to rely on the intersection points of the grooves on the stator and rotor to cause the balls and cage to

-29-

swash to keep the balls on the true median line at all times.  This can now be done under totally controlled conditions and with great accuracy.

In the compound configuration, where there is a wavy circumferential groove both on the stator and on the rotor, if it is desired positively to swash the cage, clearly the cage can no longer consist of a series of slots in which the balls are located, as in conventional CV joint practice and as in the simplex configuration with waves only on the rotor.  Since the balls have to precess relative to the stator, as well as relative to the rotor, and yet it is wished to positively swash the cage, the cage can be designed in the form of two circular guides parallel to each other, between which the balls can precess and yet which can also be swashed and kept on a true median line.  Later on, a description of a preferred form of the invention will explain how this can be done.  If it is not desired to swash the cage positively, this design need not be used and the cage can rotate with the balls.

It will now be apparent, as was emphasised earlier, that the moving elements in this torque converter that are creating the torque multiplication are all moving in two planes and with three degrees of freedom of motion.  These elements are the rotor, the balls and the cage.

-30-

Since the diameters of the working faces of the stator and the rotor are the same, ignoring the thickness of the cage, clearly the torque conversion is not being achieved radially, so therefore it is being created axially by the oscillating motion of the swash plate in the axial plane. This motion is converted into a radial component by the wavy groove in the rotor, and the degree of torque multiplication being a function of the number of waves, it is because of this that it is appropriate to call this system of torque conversion an "Axial Wave Drive".

The ratio of the device is determined entirely by the number of waves in the member having a wavy groove for a simplex construction or the numbers of waves in the two members for a duplex construction. The direction of rotation of the output relative to the input depends on the choice of flank for ball residence as explained in the comparison of Figures 1(a) and 1(b).

The steepness and depth of the waves in the circumferential groove is a function of the angle of swash and the ratio (i.e. number of waves). Clearly the waves should not be too steep since this causes adjacent flanks of the wave to be too close to one another, particularly

-31-

at their apexes, thus resulting in insufficient material between adjacent flanks, thereby causing weakness in the structure.   Also, the waves should not be too shallow as this causes a very high "pressure angle" between the flank of the wave and the flank of the groove in the stator, the forces between the two passing through the ball at that particular intersection.   As will be discussed later, in some cases the waveform may depart from a sinusoidal waveform, so causing the wave flanks to become steeper or flatter.   This will be explained in discussing how the waveforms are generated.   It is convenient however to discuss other features of the device first.

Clearly the higher the ratio (more waves) the more acute the wave angle.  The lower the ratio (fewer waves) the shallower the wave angle.  In order to maintain a steep enough wave angle to have an acceptable pressure angle, one must increase the swash angle.    Clearly there is a practical limit to the maximum angle of swash.

It is for these reasons that the device in its simplex form is broadly limited to ratios from 7:1 to 20:1 per stage.

It can now be seen that it is possible to obtain pure rolling motion between all the torque transmitting elements and that all the elements are in mesh all of the time and that in theory they are transmitting torque all of the time and thus getting the $360^\circ$ embrace that was desired.    In practice, all the balls are not transmitting torque all of the time.    Clearly, as a ball passes over the crest of a wave and is switching from one flank to the other, it is unrealistic to think that that ball is transmitting any meaningful torque.

A further teaching which will be apparent is that, in addition to there always being an even number of balls, the number of balls must also be divisible by four.    The reason for this is because of the inherent nature of the swash plate motion.    Any point on the surface of the swash plate is moving in a three-dimensional path defined by two axes, the crucial point being that these two axes are at right angles to each other.    Because of this, looking along the centre of the axis of the shaft that drives the swash plate, these two axes intersect each other at this central point. The outer ends of these two axes, i.e. at the outer edge of the swash plate rotor, are like the four points of a compass.

It is not enough therefore for there to be only an even number of balls. The number must also be divisible by four, because to those four points the balls must present a fully symmetric condition and not a semi-symmetric condition, which would be the case if the number of balls was even, but NOT divisible by four.

It has been convenient to refer to the number of balls as this simplifies the above explanation. It will be apparent however that one of the balls could be omitted without making the device inoperative. In principle, more than one ball could be omitted although the omission of balls does detract from the primary object of the invention, which is to utilise all the moving elements fully. In a simplex device, if a ball is omitted, the corresponding arcuate groove may also be omitted. The necessary condition more strictly is not that the number of balls is divisible by four but that the balls are appropriately located. In a simplex construction, the arcuate grooves have to be located on the spherical surface on lines of longitude spaced apart by $\frac{360}{n}$ degrees where $\underline{n}$ is an integral multiple of four. Thus there may be $\underline{n}$ balls or fewer than $\underline{n}$ balls provided they are on appropriate lines of longitude. If these grooves are on the stator, the rotor must have $(\underline{n} - 1)$ or $(\underline{n} + 1)$ waves where $\underline{n}$ is an integral multiple of four. As will be explained later, it is not essential to have grooves holding balls; fixed engaging elements or journalled spindles may be provided in a simplex construction. In this case, these elements must be spaced around the spherical surface at all or at only some of the points whose spacing is $\frac{360}{n}$ degrees apart around the sphere their number only having to be even but not necessarily divisible by four. In a duplex or compound construction with grooves holding balls, the stator or the rotor must have ($\underline{n}$ - 1) waves and the other of these two elements must have ($\underline{n}$ + 1) waves. The waves on each element must be of uniform pitch. For a compound construction, there may be $\underline{n}$ balls but, as will be apparent from the following description, the device will still be operative if one or a few of the balls are omitted from their prescribed stations.

In Figures 1 and 2, it has been pointed out that the wave which shows as a zig-zag line has been distorted because of its delineation in two planes.

The shape of the desired wave form for any given ratio is complex. A vital ingredient of the wave form is that at all times it shall be capable of providing three lines intersecting at the same point for each of the balls in the torque converter. These three intersecting lines are created by firstly, the swashing median line of the ball in their cage and secondly by the appropriate groove in the stator and thirdly the correct point in the wavy circumferential groove in the rotor.

The relative movement of any one of the oscillating balls and the swashing and rotating motion of the rotor, causes any one ball to trace the correct wave form on the surface of the rotor which is, of course, a part sphere.

It is roughly similar to the sinusoidal wave form that an earth satellite's path traces over the surface of the earth, for every one complete revolution of the earth. An important difference, of course, is that earth satellites are launched in such a way as not to complete a whole number of waves for each revolution of the earth. Clearly, with the torque converter, it is vital that there be a whole number of waves.

In preferred embodiments certain parameters are chosen so that the waveform is sinusoidal (that is to say a sine wave imposed upon a sphere). The actual shape of the wave is of academic interest only in so far as the wave can be generated. Later in the text, a three dimensional drafting machine will be described which generates this waveform.

The input shaft swashes the swash plate rotor element by known means, and it may also swash the cage.

The output can be taken from the swash plate rotor through a conventional CV joint or other convenient coupling.

It has been convenient to refer to a stator and a rotor. These are interchangeable in that in any given construction, either element may be held stationary and the other made rotatable. In other words the stator can be the rotor and the rotor the stator. The wavy groove can be on the stator or the rotor or both. However it is preferable to have a wavy groove on the male element.

In conventional CV joints, as has already been stated, whilst an approximation to pure rolling motion can be achieved between the balls and the male and female elements, some degree of skidding will always occur. The reason for this is that whilst in theory there should be no skidding, this could only happen if the balls were very small.

Using balls or practical size causes a situation where the balls are rolling on one wall of the groove of the female element at a contact point in the groove which is significantly further out radially from the centre of swash of the device than the contact point of that same ball where it rolls on the wall of the groove of the male element which is significantly radially further in.

Since the balls have to swash through half the angle of the swash of the CV joint in order to obtain constant velocity, the delineated distance that the ball rolls over the female's groove is greater than the delineated distance that the ball rolls over the male's groove. So skidding of the balls must occur in some degree. The balls cannot be allowed to precess at their chosen rate as in a ball thrust bearing.

In the simplex configuration of the torque converter, if the wavy groove is placed on the male element, rather than on the female element, by judicious choice of the size of the balls and the profile of the groove, the delineated distance of one wave on the male and the contact point of the ball in the groove can be made to equal the delineated distance of the groove in the female at the contact point of the ball, even though the wave in the groove of the male at the contact point of the ball is radially further in than the equivalent point on the female. Thus true rolling motion can be achieved and the skidding found in a CV joint eliminated.

-38-

In the case of the compound configuration, by putting the larger number of waves on the female element and the smaller number of waves on the male element the same rolling distance equalisation is achieved and skidding of the balls is again prevented. This is because the wave flanks are more upright on the element with the larger number of waves and less upright on the element with the smaller number of waves. The less upright flanks on the male are longer than the more upright flanks on the female.

It has been indicated earlier that the ratio of the coupling is limited by the maximum number of waves that one can impose on the circumferential groove. The reason is that the angle formed by adjacent flanks of the wave becomes too acute and at the peak of the wave there is too little material between the flanks and so the structure is weakened and no significant torque can be transmitted by the ball when it is located in the groove at this point.

In order to overcome the above problem and still obtain a high ratio per stage with the simplex configuration, it is possible to machine away all the material between the flanks of the waves at their peaks back down the wave to a point where there is sufficient material to provide adequate strength between adjacent flanks. This solution means that the number of balls that are drivingly engaged is reduced, depending on how much material has been machined away; however, since it is a high ratio torque converter, there are a large number of balls, and a compartively large number of balls will be drivingly engaged to transmit torque.

The fact that the peaks of the waves have been machined away still does not allow the balls any additional freedom since they are still trapped by the cage and the grooves in the female element. The material on the male element is only machined away radially inward to that point where the radially inward portion of the balls would be anyway, so no additional freedom is offered to the ball in this direction either.

It has been stated earlier that there is a practical limit to the magnitude of the angle of swash, particularly where low ratios (few waves) are required.

One way of reducing this problem is to swash both the male and the female elements by the same degree of angle, but in opposite directions. This in effect doubles the relative angle of swash between the male and female elements without any increase in the angle of swash relative to the input and output shafts. In this configuration, the cage ceases to swash relative to the input shaft and remains at right angles to it, since it has half the angle of swash relative to the male and to the female elements. The female swashing element is locked to the frame through a conventional CV coupling and the swashing male element is tied to the output shaft through a conventional CV coupling.

In any multitooth (element) engagement torque transmitting device, it is very important for there to be load sharing between the plurality of engaged elements. If this does not happen the whole purpose of achieving multitooth engagement is negated and the full torque will be transmitted by only one or two of the engaged elements and because there is no inherent load sharing capability and due to different tolerances introduced by machining errors, the remaining elements that are designed to be taking their share of the torque will be doing no work whatever.

In this axial wave drive torque converter, load sharing is introduced, because in the first place the torque is transmitted between the male and female elements by separate balls which are free to take up their own individual positions at the intersection of the grooves on the male and female elements. The cage, if provided, keeps the balls on a true median line, but the balls are located in slots in the cage which allow the balls freedom of motion relative to the cage in a circumferential sense only, thus providing a self indexing capability relative to the grooves.

It is also possible to accommodate and introduce a small degree of radial float capability in the swashing male element to compensate for any variation in the tolerances in the machining of the depth of the grooves.

So far we have only considered a condition where the circumferential wavy groove has been generated by a point which is passing over the surface of the sphere at a point which is tangential at all times to a great circle of the sphere. This point is always moving tangentially at any instantaneous moment that it is generating the groove, regardless of what form the wave takes.

Therefore the circumferential wavy groove is symmetrically disposed on the spherical surface of the swashing male element.

However, it is possible to dispose the circumferential wavy groove on a lesser circle of the sphere, in which case the circumferential wavy groove is asymmetrically disposed on the surface of the swashing male element. The wave form also becomes asymmetrical.

There are distinct advantages in being able to do this. It enables one to have a plurality of circumferential wavy grooves on the surface of the swashing male element. Each wavy groove will have the same number of waves in it and each set of waves will be circumferentially in phase with its axially disposed neighbour. The great advantage is that, with each additional circumferential wavy groove, it becomes possible to have another set of balls transmitting torque to the grooves in the female stator. Typically one could have from two up to as many as five circumferential wavy grooves; the centre groove would be generated on a great circle and be symmetric, the grooves each side of it being asymmetrical and generated on lesser circles.

In the example given earlier with the simplex configuration with fifteen waves and sixteen balls, it would now be possible, if as many as five wavy circumferential grooves were provided on the swashing male element, to have no less than eighty balls transmitting the torque between the male and female elements.

-42-

It is possible to apply this teaching to the compound configuration also. A plurality of grooves which are generated on lesser circles on the female and whose wave form is asymmetric will link up with each set of balls in exactly the same way as was described earlier with one wavy circumferential groove in both the male and female elements. It is important that each matching pair of grooves on the male and female elements be generated from a corresponding lesser circle so that each wavy groove will have the same degree of asymmetry in its wave form. The number of waves must still be odd, being $(n - 1)$ and $(n + 1)$ where $n$ is an integral multiple of four. The number of waves on the male and female elements must still differ by two. The number of balls (assuming the maximum number are used) must still be an even number $n$ and will be divisible by four. It is the even number between the two odd numbers of the two wavy circumferential grooves.

Later in the text, it will be described how the drafting machine already referred to can be made to generate the asymmetric circumferential wavy grooves on lesser circles of the sphere.

In these configurations it is still only necessary to have one cage, but it must be designed to accommodate as many sets of balls as there are sets of circumferential wavy grooves. It may however, for ease of construction, be convenient to have one cage per set of balls.

Various preferred configurations of torque converter will now be described.

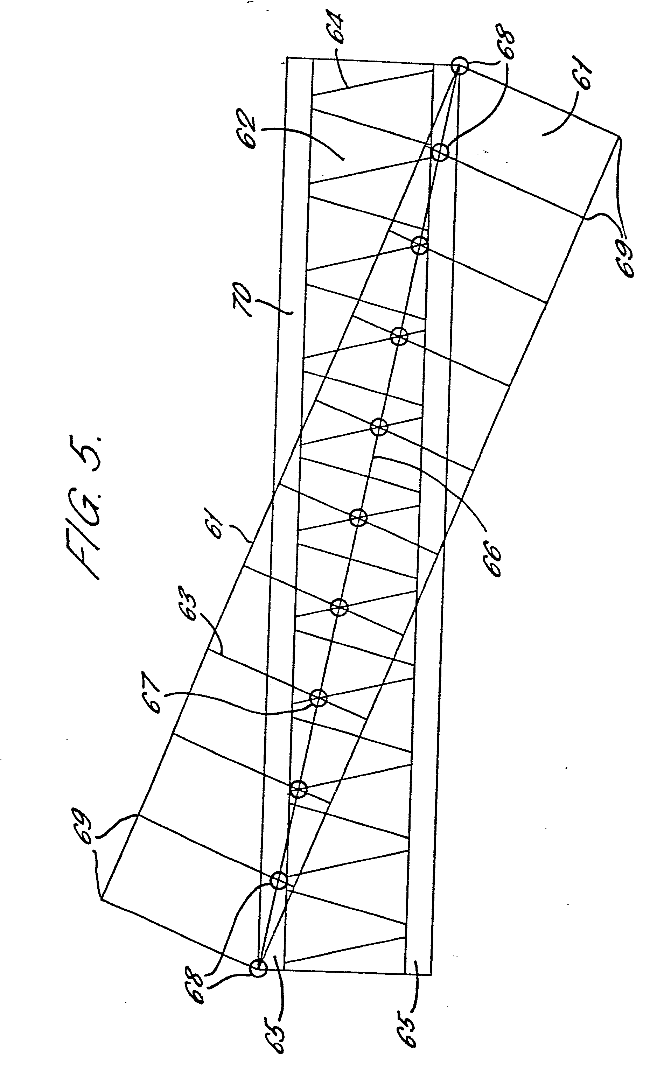

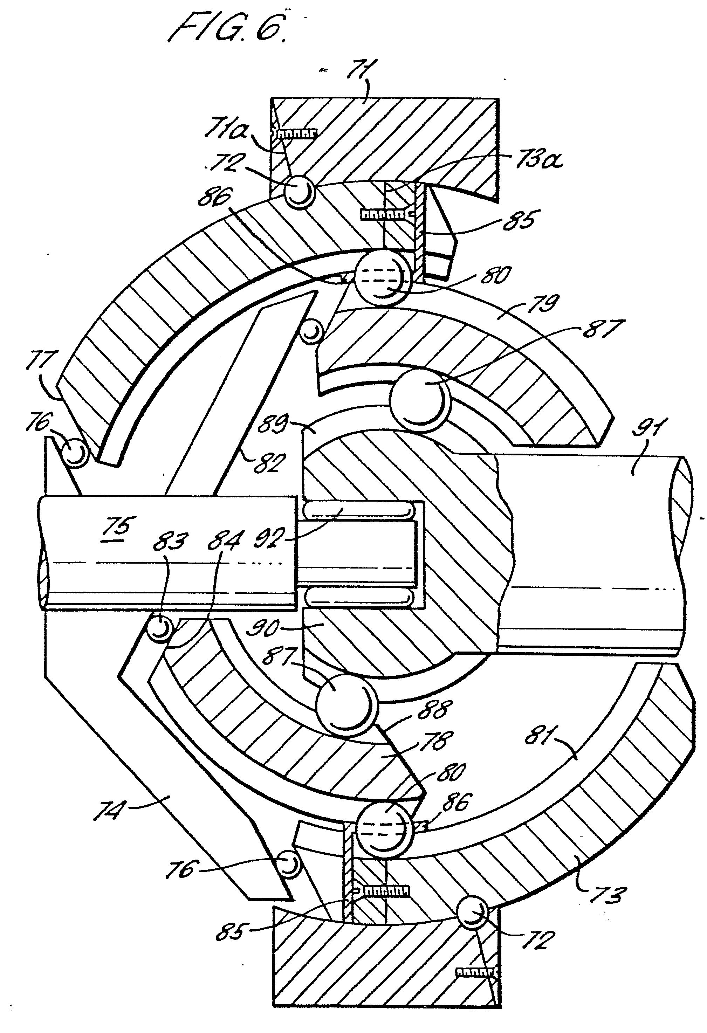

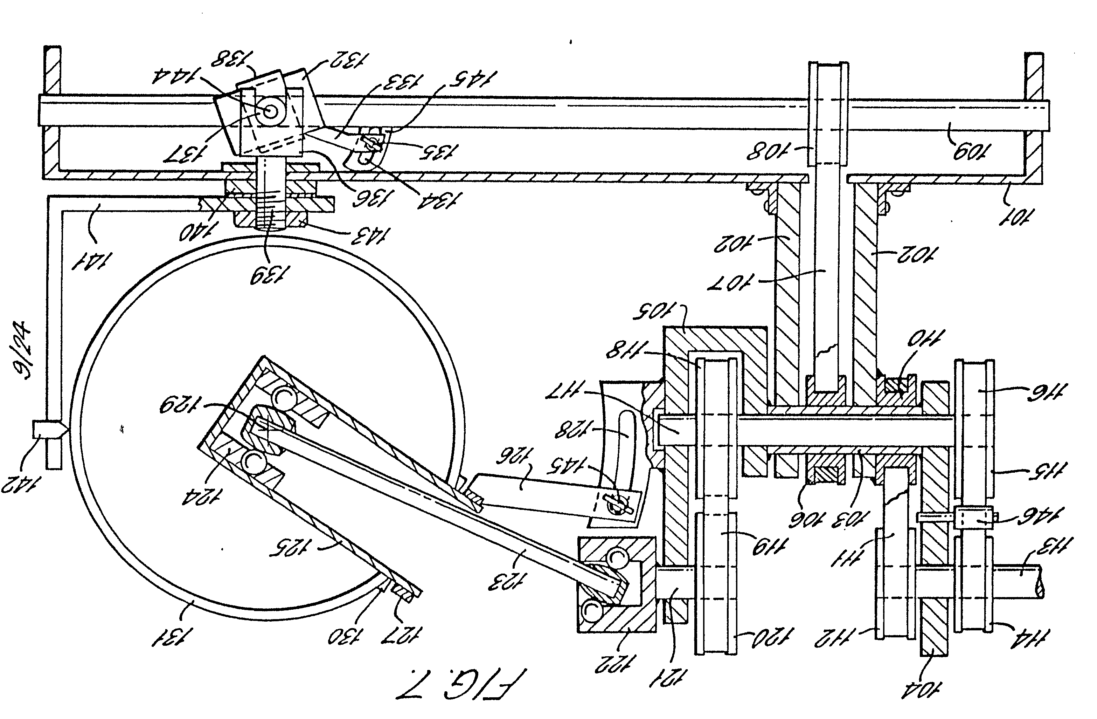

Fig. 3 shows a swash plate 31 which is a portion of a
sphere upon which is cut wavy circumferential groove 32 upon its
spherical surface.    There are thirteen waves in the circumferential groove and it is emphasised that the wave form shown
in Fig. 3 is only an approximation to the correct wave form.
There are twelve balls 33 located in the wavy circumferential
groove 32 which precess in it.    A female stator 34 is drawn
in the male configuration in order to make it more understandable to show the position of the balls 33 in axial grooves
35 of the stator.    In fact, the stator is a part of the
surface of a spheroid with the grooves on its internal surface.
Dashed line 36 represents the swashing median line of the
balls 33.    This median line swashes at an angle $\frac{1}{2}\theta$ which is
half the angle of swash of the swashing male member.    This
angle is shown at 37.    The angle $\theta$ which is the angle of swash
of the male element is shown at 38.    The dotted lines 39
demonstrate that the balls 34 are in the same position both on
the male and female elements.

Figure 4 is a general arrangement drawing of an axial
wave drive torque converter in one of the preferred arrangements.
An input shaft 41 is supported in bearings in a frame 42 and is
free to rotate in it.    One end of the input shaft 41 is
bearingly supported by a spigot bearing 43 in an output shaft 44.
A swash plate 45 is fixedly attached to the input shaft 41 and
therefore rotates with it.    An axial thrust bearing 46 imparts the axial thrust of a swash plate 45 to a swashing male member 47 through a thrust plate 48, which is fixedly attached to swashing male member 47. On the internal diameter of swashing male member 47 is located and fixedly attached a conventional constant velocity universal joint which is shown as having male grooves 49 and female grooves 50 and balls 51. The male grooves 49 are cut in the male member 52 which is fixedly attached to the frame 42 through a radial plate 53. Thus the swashing male member 47 can only swash but cannot rotate since it is tied to the frame 42 through the constant velocity universal joint. There are twelve balls 54 which are recessed in a wavy circumferential groove 55 in the swashing male member 47 and also are recessed in axial grooves 56 of a rotating female member 57 which is attached fixedly through another radial plate 58 to the output shaft 44. The female member 57 is split along the swashing line of the balls 54, as indicated at 57a, for convenience of assembly. A cage 59 which swashes at half the angle of swash of swashing male member 47 has slots 60 in which are located the balls 54. The cage 59 keeps the balls 54 always on a true median line, which median line is constantly swashing at half the angle of swash of the swashing male member.

The cage 59 rotates with female member 57, since the balls 54 are in slots 60 in the cage. The swashing male member 47 is unable to move axially, except in a swashing sense, because the CV joint, shown in the drawing by male grooves 49, female grooves 50 and balls 51 is designed so as not to accommodate any "plunge".

The swashing cage 59 is trapped between the spherical surface of the male member 47 and the female member 57 and so is incapable of axial motion other than in a swashing sense. The cage itself transmits no torque. Since clearly the swashing male element 47 is a torque reaction member, it is desirable to prevent any form of axial motion of this male element, except in a swashing sense and it will be noted that this element is prevented from any true axial motion because of the balls 54 acting in the grooves 56 and the circumferential wavy groove 55.

In this particular preferred embodiment, therefore, the input shaft 41 rotates, so rotating the swash plate 45, which, through the axial thrust bearing 46 transmits the swashing action to the axial thrust plate 48 and thence to the swashing male member 47 which swashes but does not rotate, since it is tied to the frame 42 through the male member 52 by the CV coupling represented by the grooves 49 and 50 and the balls 51. Since the balls 54 are captured by the grooves 56 and the slots 60 in the cage 59, the balls 54 are forced to precess in the wavy circumferential groove 55 causing the female element 57 to rotate, which transmits this rotation through the radial plate 58 to the output shaft 44, at a reduced speed and multiplied torque relative to that provided by the input shaft. The reduction of speed and the multiplication of torque are a function of the number of waves in the circumferential groove 55 and the number of balls 54 and grooves 56 as previously described.

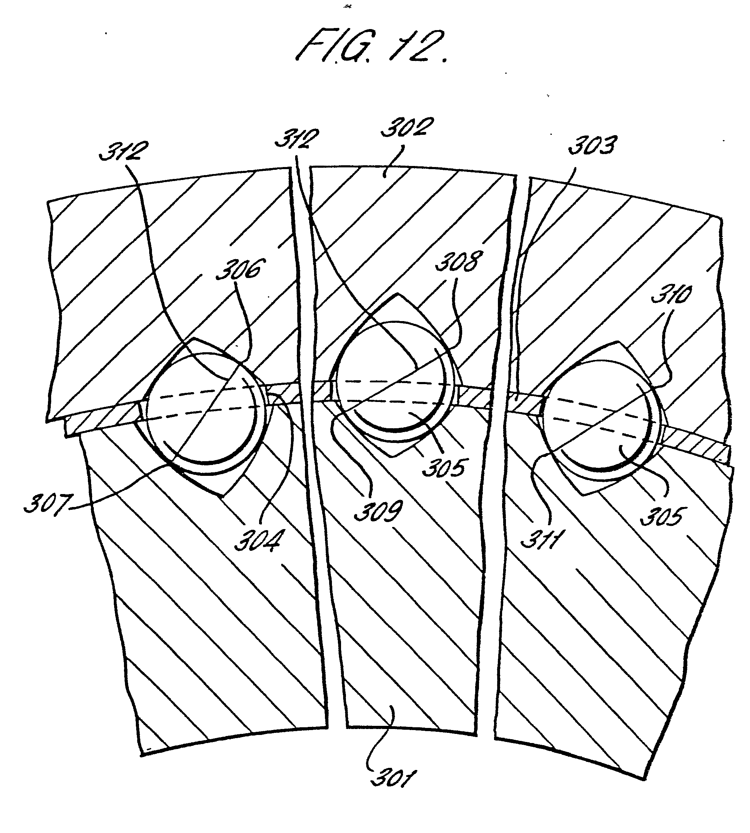

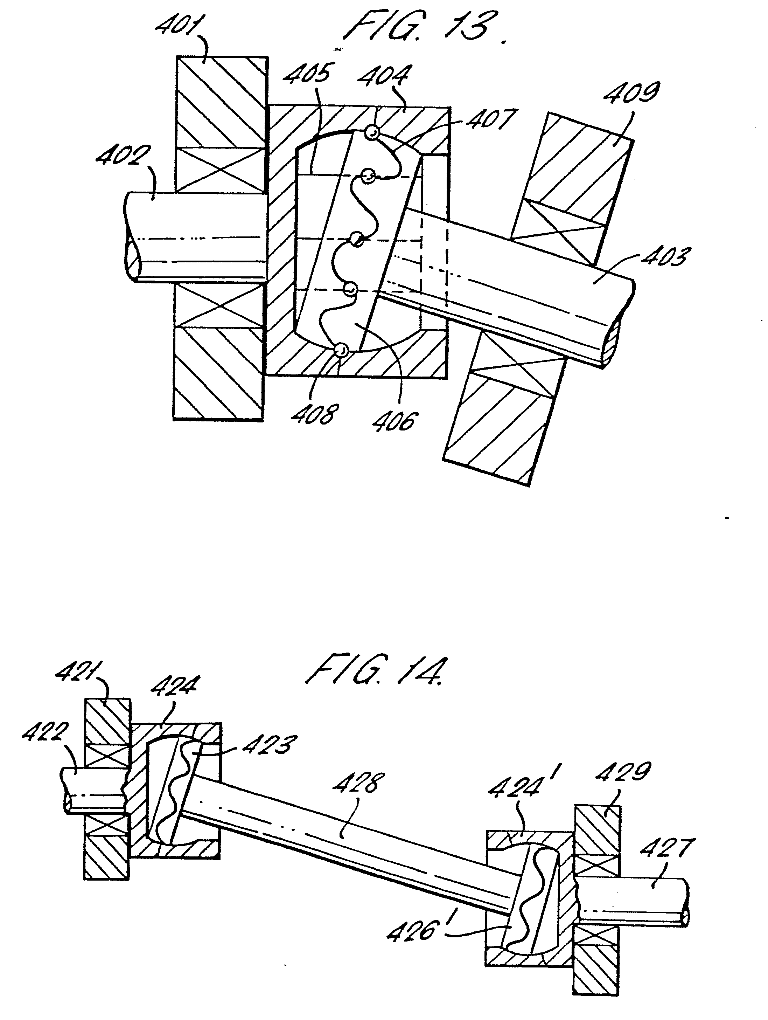

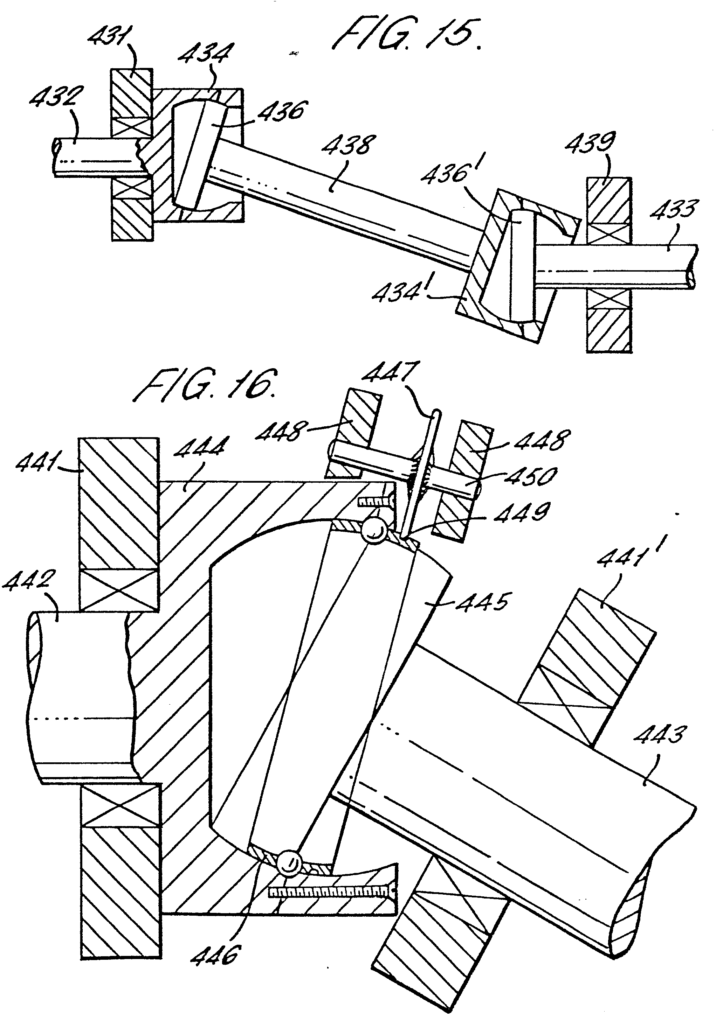

Figure 5 is a schematic drawing, in a flat plane, of 180° of an axial wave drive unit having 21 waves in the circumferential groove, of which only 10½ can be seen because only 180° is drawn. For simplicity, the waves in this diagram are shown as zig-zag lines. The surfaces of the male swashing element 62 and the female stator element 61 have been delineated in both planes for reasons of clarity. The lines 63 represent the centre lines of the axial grooves on the female stator element 61. The lines 64 represent the centre line of the wavy circumferential groove on the male swashing element 62. The lines 65, intersecting the lines 64, show thereby the points at which the peaks of the waves have been machined away on the swashing male element 62 because of the very acute angle of their peaks causing there to be insufficient material at this point between the flanks of the wave to be capable of providing useful torque. The line 66 represents the median line of the balls 67 as they swash in their cage at half the angle of swash of the swashing male element 62.

It will be seen that, since the peaks of the waves have been machined away, the two balls (shown at 68) at each end of the 180° are beyond the lines 64 and that the two axial grooves 69 at each end of the 180° do not intersect with the lines 64 any longer. However the balls 68 are still trapped in the grooves 63 and by the slots in the cage and by the surface of the metal 70 on the swashing male element 62.

This demonstrates the teaching described earlier that a comparatively high ratio per stage can be obtained with a modest angle of swash and have acute angled wave fronts and still have a large number of balls transmitting torque. In the example given where a theoretical maximum of twenty balls should be transmitting torque, in fact after cutting away the wave peaks we are left with fourteen balls transmitting torque. In fact of the theoretical maximum of twenty balls, only eighteen would normally be doing any useful work, since two of the balls are changing from one flank to the other and at that moment are unable to transmit torque. So in practice with this configuration, the machining away of the peaks of the waves results only in that four more balls are not functioning.

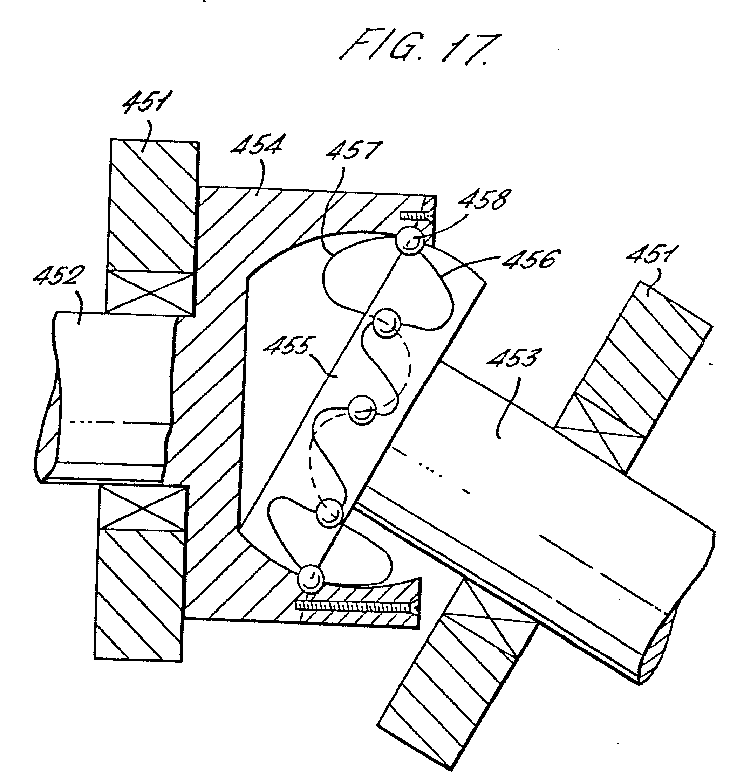

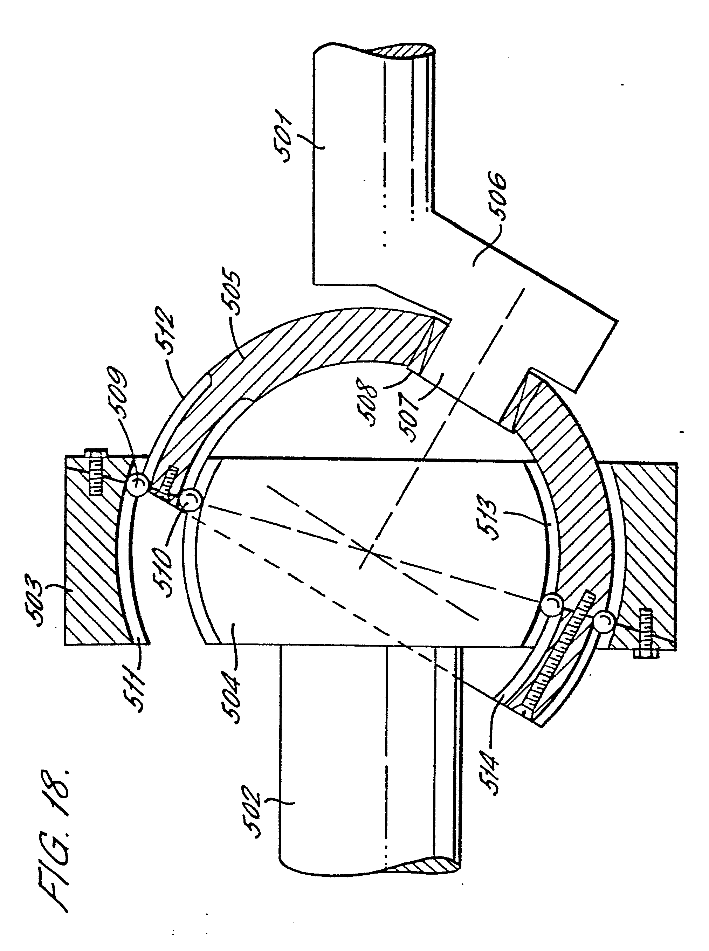

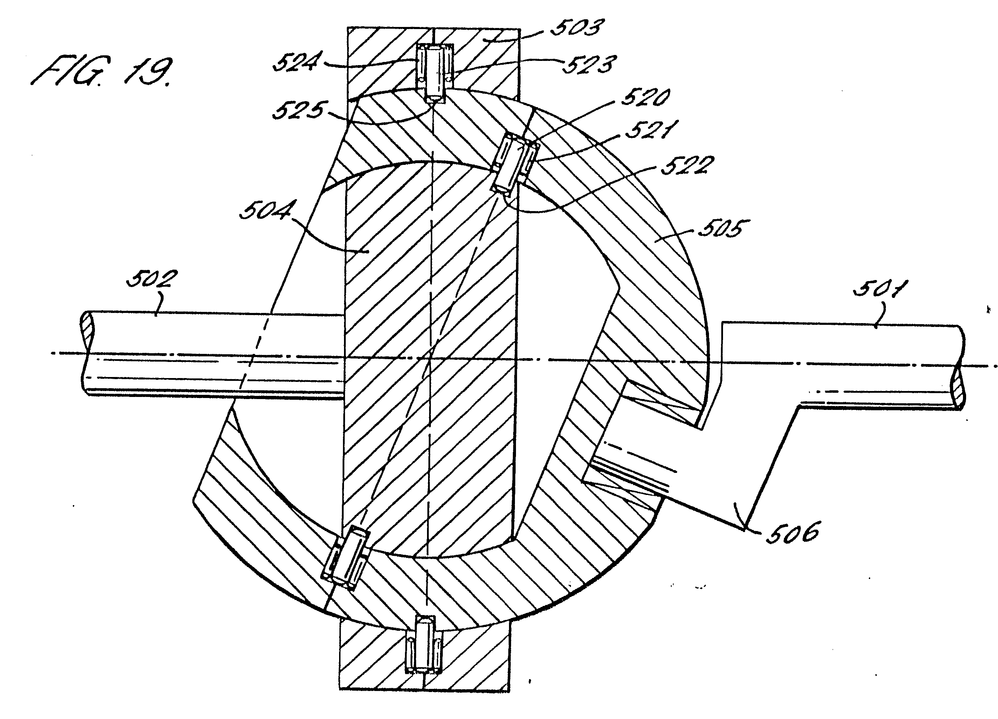

Figure 6 shows a configuration of an axial wave drive torque converter where both the male rotor and the female stator both swash by the same degree but in opposite directions, as has been described earlier.

Stator member 71 is the female element of a conventional CV joint where no accommodation for "plunge" is provided for. For clarity, no cage is shown in this CV joint. The member 71, for assembly, is split along the line 71a. Balls 72 roll in grooves in the female element 71 and in the grooves on the male surface of an element 73 in the conventional way. On the inner surface of element 73 are machined grooves which element would normally represent the female stator in an axial wave drive. Element 73 is split along line 73a for purposes of assembly.

In this case the element 73 is swashed by a swash plate 74 which is fixedly attached to an input shaft 75. Swash plate 74 transmits its swashing drive through balls of an axial thrust bearing 76 against a radial face 77 of element 73. Since there is no "plunge" capability in the CV joint on stator 71, no axial movement except in a swashing sense is possible of element 73.

A male swashing member 78 has a circumferentially wavy groove 79 machined on its outer surface. Balls 80 recess in this groove 79 and also recess in axial grooves 81 of element 73. Male swashing member 78 is swashed by second swash plate 82 which has the same but opposite angle to swash plate 74. Swash plate 82 is also fixedly attached to input shaft 75. Swash plate 82 transmits its swashing drive through balls of an axial thrust bearing 83 against a radial thrust face 84 to male swashing element 78.

The balls 80 are held in slots in a cage 86 which is fixedly attached to stator element 71 through radial spokes 85. Radial slots are cut in the element 73 to accommodate these radial spokes 85. These slots are located between the axial grooves for balls 72 on the outer surface of element 73 and on the underside of each wave on the inner face of element 73. The spokes 85 alternate each side of the balls 80 so that the slots for the spokes do not cut into the wave form. Also enough radial width is provided in the slots to provide for the inherent radial motion caused by the figure of eight effect mentioned earlier in a swash plate motion.

The reason the cage 86 can be fixedly attached to stator element 71 through spokes 85 and does not need to swash through half the angle of swash of the male swashing element as in previous configurations, is because the male and female elements are both swashing by the same angle but in opposite directions.

The male swashing element 78, on its inner surface, has a conventional CV joint which again is designed not to accommodate "plunge" so that there can be no axial motion, except in a swashing sense, of element 78. Balls 87 transmit the rotational torque of element 78 caused by the circumferential wavy groove 79 from the female axial grooves 88 to male axial grooves 89 on a male element 90 of this CV joint. This male element 90 is integral with an output shaft 91. For clarity no cage is shown in this CV joint.

The input shaft 75 is supported in the output shaft 91 by a needle spigot bearing 92.

With this configuration, because of the double swash of both the male and female elements, the apparent angle of swash between the two elements has been doubled, even though the angle of swash of these elements relative to the input shaft and the output shaft has not been increased.  This construction allows one to have a very few number of waves in the circumferential groove and thus get a low ratio and yet still have an acceptable pressure angle on the flank of the wave.

If only the male element were swashed in the conventional way, the angle of swash would have to be so great that it would be impossible to get a large enough diameter on the output shaft from the CV joint to take the torque generated by the axial wave drive.

Where there is a compound configuration and where the cage is not free to rotate since it is desired positively to swash it, as for example in the construction of Figure 6, and if this Figure 6 construction was arranged as a compound axial wave drive rather than the simplex configuration that has just been described, then clearly the balls 80 would have to be able to rotate about the axis of the cage since they would precess relative to element 73 and swashing male element would also be rotating in the opposite direction.

In order to accommodate the rotation of the balls 80 about the axis of the whole device, it is necessary for there to be a continuous circumferential slot in cage 86. This can be achieved by making the cage in the form of two rings supported respectively by two sets of spokes 85. These two sets of spokes are located one on each side of the balls 80 and are accommodated in radial slots through the element 73 as already described.

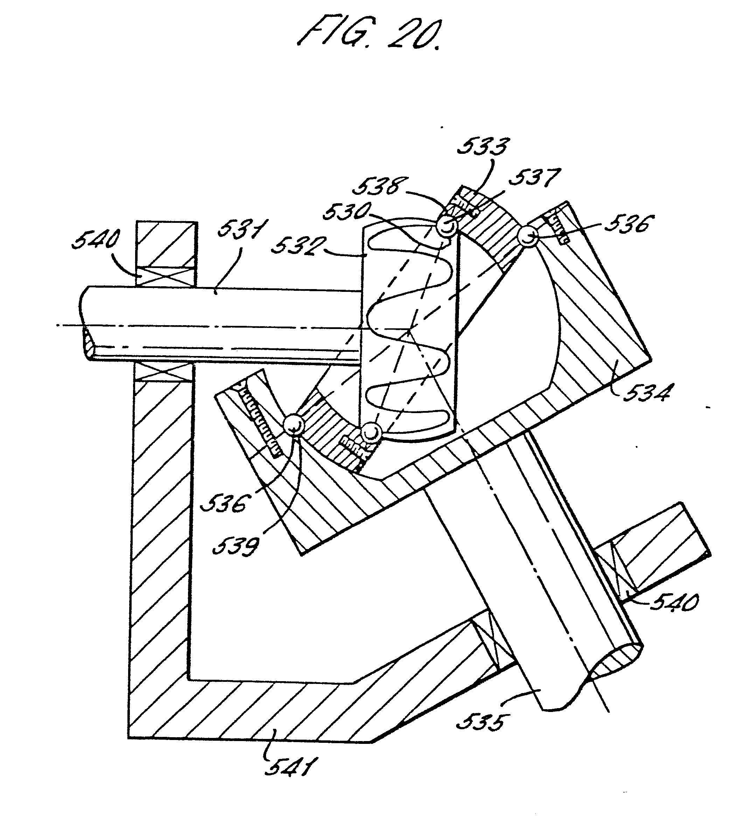

A three dimensional drafting machine that generates the wave form on the circumferential wavy grooves will now be described with reference to Figure 7. This Figure is a general arrangement drawing of the device. A base frame 101 through a bracket supports 102 carries a drive tube 103 which is free to run in the bracket supports 102. A radial arm 104 is fixedly attached to the drive tube 103, as is also a cranked radial arm 105. A notched belt pulley 106 is fixedly attached to the drive tube 103. The notched belt pulley 106 drives, through a notched belt 107, another notched pulley 108 of the same diameter as notched pulley 105. The notched pulley 108 is fixedly attached to a lower drive shaft 109. Thus, when drive tube 103 is rotated, the lower drive shaft 109 rotates at the same speed and in the same direction. Another notched pulley 110 is fixedly attached to the support bracket 102 and thus to the base frame 107 and thus cannot rotate. The pulley 110 is connected through another notched belt 111 to a further notched pulley 112 on a gyrating shaft 113. The gyrating shaft 113 is free to rotate in the radial arm 104 and is fixedly attached to the notched pulley 112. The notched pulley 112 and notched pulley 110 are of the same diameter.

As gyrating shaft 113 is gyrated it is unable to rotate because of the 1:1 ratio of the notched belt 111 and pulley 112 and 110 combination and the fact that the notched pulley 110 is tied to the base frame 101. Gyrating the gyrating shaft 113 does however cause the drive tube 103, the radial arm 104, the cranked radial arm 105 and the lower drive shaft 109 all to rotate at the same speed and in the same direction.

The gyrating shaft 113 has a further notched pulley 114 fixedly attached to it, which drives, through notched belt 116, another notched pulley 115, which is fixedly attached to one end of an upper drive shaft 117, which is free to run in drive tube 103. At the other end of the upper drive shaft 117 is fixedly attached another notched pulley 118 which, through a notched belt 119, drives a shaft 121 through notched pulley 120 which is fixedly attached to shaft 121. The ratio between the upper drive shaft 117 and the shaft 121 is 1:1 since the two notched pulleys 118 and 120 are of equal diameter.

-53-

Provision is made for changing the size and therefore the relative ratio between the notched pulleys 114 and 115, so that, as the gyrating shaft 113 is gyrated, it can cause the upper drive shaft 117 to rotate at a totally different speed from that of the drive tube 103. A plain pulley 146 is a tensioning pulley to keep the notched belt 116 taut when the sizes of the notched pulleys 114 and 115 are changed.

The shaft 121 is connected to a CV coupling 122. A shaft 123 emerges from the other side of this CV coupling 122 at a considerable angle of declination to shaft 121 - typically 35°. This angle of declination is kept constant. The shaft 123 connects to a second CV coupling 124. The other end of second CV coupling 124 connects to a cylinder 125 which passes back over CV coupling 124 and shaft 123. One end of a bearing arm 126 supports a journal bearing 127 in which the cylinder 125 is rotatably supported. The other end of the bearing arm 126 is bolted in an arcuate slot 128 which is cut into the cranked radial arm 105. The whole cylinder assembly and bearing arm can pivot about a pivot centre 129 which is the centre of the CV coupling 124. The pivot centre 129 is located on the centre line of the upper drive shaft 117. By releasing a locking nut 143 on the bearing arm 126 and allowing the bolt carrying arm 126 to slide in the arcuate slot 128, the nut 143 enables the arm 126 to be bolted at whatever angle is desired. A collar 130 is fixedly attached to the cylinder 125. This collar 130 holds an opaque glass sphere 131.

If the notched pulley 114 has thirty teeth and the notched pulley 115 has twenty-eight teeth, the movement of the gyrating shaft 113 through one complete gyratory revolution will have caused the upper drive shaft 117 to revolve 1/15th of a revolution. At the same time the drive tube 103 will have made one revolution.

The upper drive shaft 117 ultimately turns the opaque glass sphere also through 1/15th of a revolution but at an angle of declination provided by the two CV joints 122, 124 and the position of the arcuate slot 128 where bearing arm 126 has been bolted. However, since the arcuate slot 128 is attached to the cranked radial arm 105 which is attached to drive tube 103, the cylinder 125 will be made to swash by the bearing arm 126 once for every gyration of the gyrating shaft 113 and at the same time swashing the opaque glass sphere 131. This opaque glass sphere 131 will rotate 1/15th of a revolution at the same time.

It has already been indicated that the lower drive shaft 109 rotates at the same speed as the drive tube 103.

-55-

The lower drive shaft 109, which is bearingly mounted, at each of its ends, in the base frame 101, has fixedly attached to it a crank member 132, whose angle of incidence can be adjusted relative to lower drive shaft 109 by a bearing arm 133 in an arcuate slot 134 in arm 145 attached to shaft 109 and locked by nut and bolt 135. The crank member 132 pivots about a bearing pin 144, which, at the instantaneous moment as drawn, just happens to be coincident with pins 137. A fork 136 can pivot on the pins 137 which are attached to a bearing sleeve 138 which can rotate relative to the crank member 132.

The fork 136 is attached to a vertical shaft 139 which passes through a bearing 140 in the base frame 101. The shaft 139 is adjustably attached to a stylus arm 141 by a locking nut 143. The stylus arm 141 can be adjusted radially on shaft 139 by loosening the locking nut 143.

In Figure 7, the stylus arm 141 is shown displaced by 90° of arc from its normal mid-point position. This has been done for the sake of clarity, in order to show the shape and position of the stylus arm 141. A stylus 142 is located at the upper end of the stylus arm 141 at a point which is exactly on the same horizontal plane as the axis of upper drive shaft 117.

The axis of vertical shaft 139 is at right angles to the axis of upper drive shaft 117 but in the same vertical plane as the axis of shaft 113. The axis of vertical shaft 139 also passes through the pivot centre 129. The stylus arm 141 is suitably shaped to curve round the opaque glass sphere 131, so that the stylus 142 may rest correctly on the surface of opaque glass sphere 131 on exactly the same horizontal plane as the horizontal plane of the axis of upper drive shaft 117.

For each complete gyration of gyrating shaft 113, the lower drive shaft 109 rotates once. This causes the stylus arm 141 to oscillate about the axis of the vertical shaft 139. The number of degrees of arc through which it oscillates is directly proportional to the angle at which the crank member 132 is set relative to the lower drive shaft 109 by the adjusting of the locked position with nut and bolt 135. So, as the opaque glass sphere 131 does one full cycle of swash and also rotates 1/15th of a revolution, the stylus 142 will also have done one complete oscillation.

It will become apparent now that the stylus 142 is duplicating the motion of the oscillating balls in the grooves of the female stator element of an axial wave drive unit and the opaque glass sphere 131 is duplicating the swashing and rotating motion of the male element in an axial wave drive unit. Since the angle of swash of the balls and the cage on their swashing median line, in the embodiments so far described, is

-57-

half the angle of swash of the swashing male element, the angle at which the crank member 132 is set at half that at which the cylinder 125 is set.

It can be seen that, by adjusting the ratio of notched pulleys 114 and 115, the speed of the upper drive shaft 117 relative to the drive tube 103 can be altered in order to get whatever number of waves is required, on swashing opaque glass sphere 131, relative to one whole revolution. The depth of the wave and hence the angle of swash can be chosen by adjusting the angles of the cylinder 125 and the crank member 132. Thus, almost any combination and number and form of circumferential wavy lines can be generated by the drafting machine to duplicate the path of the desired circumferential wavy groove.

Normally, in order to generate a line representing a symmetric circumferential wavy groove where the generating point is the tangent to a great circle at all times, the stylus arm 141 is locked to the vertical shaft 139 by the locking nut 143 in a position such that, when the stylus arm 141 is in a position where its radial arm is at right angles to the axis of the upper drive shaft 117, after one full gyration of gyrating shaft 113, the stylus arm 141 will oscillate by an equal number of degrees of arc each side of this position.

If asymmetric circumferential wavy lines are to be reproduced, then by loosening the locking nut 143, the stylus arm 141 can be moved by the degree of asymmetry desired away from this centre point and locked again.

0048593

The above described drafting machine generates the required waveforms. It enables one readily to see the effect on the waveform of changes in various parameters.

When analysing the waveform of the circumferential wavy groove in any particular configuration of an Axial Wave Drive unit, it is important to understand the path that a point on the surface of a swashing but not rotating sphere takes relative to a stationary stylus point.

For a given angle of swash this path will vary from that of a circle, if the stylus point is coincident with the axis of the input shaft driving the swashing element to that of a very elongated figure of eight as shown at 701 in Figure 25 when the stylus point is at right angles to the axis of the input shaft and if the point were extended, would pass through the centre point of the swashing sphere. Generally, in the present torque converters, we are concerned with the elongated figure of eight.

In the position where the generating point is at right angles to the input shaft where it can generate a symmetric waveform on the swashing and rotating sphere, as has already been indicated, if the sphere is not allowed to rotate, the path generated will be that of an elongated figure of eight. The length of the figure of eight will be a function of the angle of swash.

A very important teaching now emerges. If the stylus is oscillated in an arc whose radius is equal to the radius of the sphere, and the centre of the circle of said arc intersects the axis of the input shaft and the plane of oscillation is in line with the axis of the input shaft and furthermore that the oscillation is in phase with but is half the amplitude of the angle of swash of the sphere, then the path that the stylus generates will become a straight line 702 drawn within the figure of eight in Figure 25. Such a straight line, of the appropriate amplitude, is shown at 702 on the left of the Figure, the line being drawn within the corresponding figure of eight curve 706. The reason for the halving of amplitude is because the two motions are in phase with each other and therefore the deflection angles subtract from each other. This trace in effect is duplicating the motion of the balls in the arcuate grooves in the female stator. Since the amplitude is halved, therefore, for a given height, the angle of swash has to be doubled to get the straight 702 to be amplitude of the sine wave 703 and therefore the figure of eight would be double the amplitude, as is shown at the left of Figure 25.

Clearly therefore in the above condition just described, since a straight line is produced when the sphere is swashing but not rotating, as soon as it is arranged for it to rotate at a predetermined speed, the path generated by the oscillating stylus will be that of a sine wave imposed upon a sphere as shown by curve 703 in Figure 25.

This is the preferred condition and the preferred waveform for the Axial Wave Drive unit. For a simplex or a duplex unit, this is achieved by making the angle of swash of the balls half that of the relative swash angle between the male and female elements.

One configuration previously described dispenses with the oscillating balls and arcuate grooves in the female stator and substitute radially disposed spindles which is the equivalent to having a stationary stylus point. In which case, each half cycle of the elongated figure of eight 701 is imposed on the waveform and a significantly modified sine wave is imposed upon the swashing and rotating sphere. Depending on the relative directions of rotation the effect is either to steepen the flanks as shown by dashed line 704 in the left of Figure 25 or to flatten them as shown by chain lines 705 in the right of Figure 25.

However, there is no reason why the ratio of 2 : 1 between angle of swash and angle of oscillation need not be changed, but the waveform ceases to be a sine wave imposed on a sphere. The angle of oscillation and therefore the angle of swash of the median line of the balls can be infinitely varied relative to the angle of swash of the sphere and can be a useful design tool where it is desired to reduce the deflection angle of an angle drive unit, yet maintain a good wave height. It is also a useful design tool in obtaining equality of rolling velocities of the balls on the surface of the walls of the grooves in the male and female elements by apportioning the rolling distance, caused by the ability to choose the angle of swash of the median line of the balls. The shape of the wave front can also be tailored to suit specific designs and configurations.

The drafting machine can be adjusted to duplicate the required conditions. Except where the 2:1 swash angle ratio is being generated, it is important to establish the direction of rotation of the sphere relative to the input shaft of the drafting machine, depending on if a waveform which will produce reversal or not is required. Contra rotation or not of the drafting machine is achieved by the correct choice of the ratios of pulleys 114 and 115 in Figure 7. Depending on the ratio of the deflection angles to each other, an infinite variation in waveform caused by the figure of eight effect can be obtained.

The drafting machine can conveniently be used to

-62-

establish the path of a point on the swashing sphere by adjusting the pulleys 114 and 115 to get unity ratio, so that the sphere only swashes and does not rotate. The stylus swashing mechanism can also be disconnected to create traces in a $90^{\circ}$ arc.

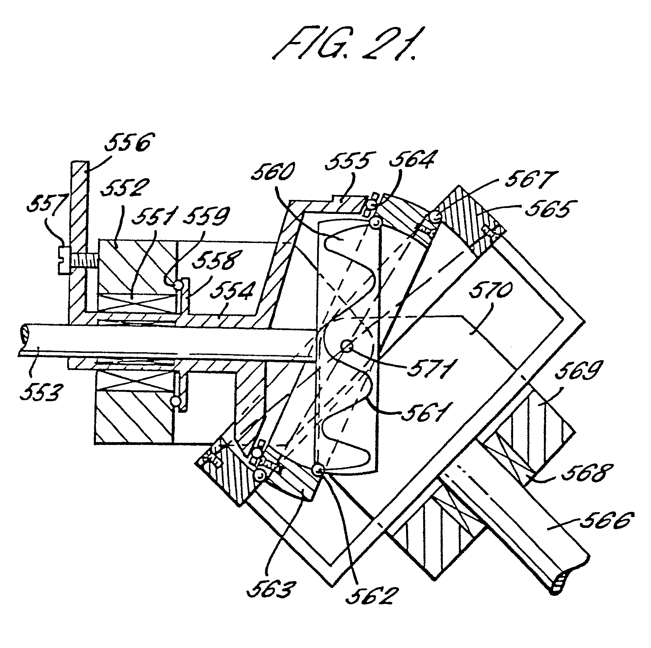

In describing embodiments of this invention, mention has been made of a cage for balls located between the male and female members of the torque converter. Figure 8 shows a cage for balls 151, the cage having twin parallel circumferential rails  152 which are held in correct axial displacement to one another by several separate bridging elements 153 which pass well above or well below the  paths of the precessing balls 151. The bridging elements 153 are accommodated by wide slots in the female stator element, these slots being spaced between the axial grooves in the female stator element. In the compound configuration the bridging elements actually pass through tunnels going over the circumferential wavy groove in the female stator element, or under the circumferential wavy groove in the swash plate. By this arrangement the balls can precess relative to the cage and the cage need not rotate.

In order to make it possible to assemble an axial wave drive unit, the female stator must be built up in two parts.  The two parts interface at the median line of the balls in the cage.  To assemble, the cage is put

-63-

over the male rotor, assuming it has the circumferential wavy groove. The balls are placed in the slots in the cage and recessed correctly in the wavy groove. ·Then the two female elements of the stator, whose interface has been machined to the angle of the median line of the balls in the cage, are placed around the male stator and the cage and balls and then bolted together. If the interface of the two elements of the female stator is positioned anywhere else, it will become virtually impossible to assemble.

The machinery of the waveform of the ball track on the rotor and/or stator in any of the configurations described can be executed from the locus of this track as produced by the drafting machine. A computer-controlled milling machine, with geared dividing head and fixtures can be used for this purpose. Alternatively, a three-dimensional pantograph with similar equipment can equally well be used. The latter method, although slower, can be useful for experimental purposes.

-64-

Where there are a plurality of circumferential wayy grooves on the swashing male rotor, then the female stator will have to be sliced into as many parts as there are median lines of balls plus one, to make assembly possible.

A further variation of the axial wave drive system, which can be used in any simplex configuration, is to replace the owcillating balls and grooves in the female stator by needle roller bearing mounted radial spindles with the protruding part of each spindle pointing radially inwards from the female stator in the circumferential wavy groove of the male swashing rotor. In this case no cage is required. For ease of construction, the wave groove is formed in the male member and the spindles are bearingly supported in the female but the converse arrangement could be employed.

In order to generate the waveform with the drafting machine when using the spindle configuration, the only modification required is to stop the stylus from oscillating.

The schematic configuration for the spindle arrangement would be as in Figure 2 where the circles would represent spindles that are fixedly mounted on needle roller bearings facing radially inwards on the female stator instead of those circles representing oscillating balls in grooves in the female stator.

The same rules apply however, that the number of waves must be odd and the number of spindles must be one more or one less than the number of waves. The spindles must be located at positions which are evenly spaced around a circle at angular intervals of $\frac{360}{n}$ degrees where $n$ is even numbered but in this configuration does not have to be an integral multiple of four. There would normally be $n$ spindles, that is one at each location but, as previously explained the device would be operative if one or a few of the spindles were omitted.

In this configuration the female stator need no longer present the internal surface of a sphere. All the female stator has to be is a rigid circular frame on which the radial spindles are mounted. A further attraction to this configuration is that the angle of swash of the swashing male rotor is halved since the meshing elements are now stationary.

Figure 9 is a drawing showing one embodiment of such an axial wave drive configuration with fixed meshing elements. A female stator 161 holds spindles 166 in

-66-

needle bearings 167. A swashing male rotor 162 has circumferential wavy groove 173 in which the spindles 166 mesh. An input shaft 163 rotates a swash plate 164 which is fixedly attached to the shaft 163. An axial thrust race 168, through the swash plate 164, swashes the swashing male rotor 162. An output shaft 165 is driven from the male swashing rotor 162 through a CV joint represented by a cage 169, balls 170, axial grooves 172 on output shaft 165 and axial grooves 171 on the male swashing rotor 162.

Since the CV joint 169, 170 has no accommodation for "plunge", the male swashing rotor 162 cannot be axially displaced, except in a swashing sense by swash plate 164.

In order to introduce load sharing into this configuration, the distance between the end of each needle bearing 167 which supports a spindle 166 and the point where the spindle 166 meets the circumferential groove 173 can be increased (more or less cantilever in other words) and the shaft of the spindle 166 made a little elastic so that controlled deflection can take place, thus sharing the load between all the spindles.

It will be noted that, in this construction, unlike the construction of the previous mentioned U.S. Patent 2559093, there are spindles supported in needle bearings 167 to permit of rolling motion. Furthermore , there is no ball cage acting as a torque transmitting element. The cage 169 acts only as a guide member, this ensuring pure rolling motion and high efficiency.

-67-

Figure 10 shows a general arrangement of an axial wave drive unit which includes means for positively swashing the cage at half the angle of swash of the male swashing element.

However, in this particular configuration the female element with the axial grooves in this instance happens to be the rotating output and, for reasons previously explained in the description of Figure 4, the cage will have to be altered somewhat from that shown in Figure 8. In Figure 10 a female element 181, split at 181a for assembly, has axial grooves 182 and constitutes the rotating output.

A cage 183 for holding balls 198 is between the female element 181 and male element 186. It is preferable not to have bridges in the cage holding the two circular rails correctly axially disposed the one from the other. Instead there are two sets of radial spokes 184, each set of spokes typically having either three or five spokes. Each set of spokes 184 is connected to one half of a circumferential circular rail of the cage 183. Each set of spokes 184 passes through its respective set of slots 185 in the swashing male element 186. The spokes 184 pass on through other slots 187 between the axial grooves 188 in a CV joint 189. These spokes 184 also pass between axial grooves 190 in the female element of the CV joint 189 which is part of a swashing hub 191 which runs free through a needle bearing 192 on an angled crank 193 on an input shaft 194. The angle $\frac{1}{2}\theta$ of the angled crank 193 to the axis of the input shaft 194 is half the angle ($\theta$) of swash of the swashing male element 186. This male element has circumferential wavy grooves 195.

It will become apparent that the reason for the two sets of spokes 184 in this configuration rather than the use of bridges to connect the rails of the cage 183 is that the slots 185 cannot be passed axially all the way through swashing male element 186, since these slots would cut through the circumferential wavy groove 195. By this arrangement each set of spokes 184 is staggered radially so that a slot can be cut axially under each wave but not through the groove. The two sets of spokes 184, apart from being radially staggered are also offset axially, the one set from the other, by an amount rather more than the thickness of the circumferential wavy groove 195. In this way sufficient strength is preserved in the swashing male element 186. Additionally a radial thrust plate 196 can be bolted onto the swashing male
element 186 and over the slots 185 after the spokes 184
have been installed.    Also a similar radial plate 197
can be bolted on the other side of swashing male
element 186 after the other set of spokes 184 have been
installed.

It can now be seen that the cage 183 can now be
positively swashed, the balls 198 thereby swashing and
being kept on a true median line at all times even though
the balls 198 are also precessing relative to the
swashing male element 186 and orbiting around the cage
183 at the same time.

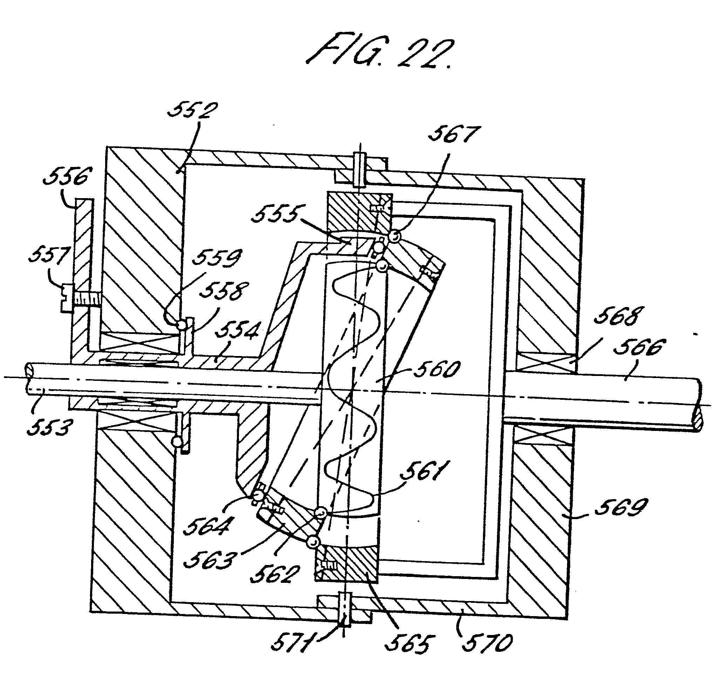

Figure 11 illustrates a configuration where there
are two asymmetric circumferential wavy grooves
disposed on lesser circles of swashing male element
which is a part sphere.    In this Figure, there are
shown diagrammatically a male element 201 constituting
a rotor and a female element 202 which is the stator.
There are seven waves in each circumferential wavy
groove 205 on the male element 201 and there are two
sets of eight balls 204 which are partly recessed in
these circumferential wavy grooves 205 and are also
partly recessed in eight axial concave arcuate grooves
206 disposed around the female stator 202.  A cage 203
holds the balls 204 in two sets of slots circumferentially disposed about the cage 203.    Dotted lines 207 represent the two swashing lesser circles on which the cage 203 causes the balls 204 to track.

The angle $\Theta$ is the angle of swash of the swashing male element 201 and the angle $\frac{1}{2}\Theta$ is the angle of swash of the swashing cage 203, this being half the angle of swash of the swashing male element 201.

It is emphasised that the form of the circumferential asymetric wavy grooves in Figure 11 is only an approximation to their true form.    This Figure shows how it is readily possible to provide a plurality of circumferential wavy grooves whilst still keeping the device to a small size.    The increased number of balls results in a corresponding increase in the torque handling capacity.

Earlier, it has been described how the skidding of the balls can be prevented, in the simplex construction, by having the circumferential wavy groove on the swashing male member and the arcuate grooves on the female member and, in the duplex (compound) configuration, by putting the smaller number of waves on the swashing male member and the larger number of waves on the female member.    However, whilst the total delineated distance for each swash that the balls cover on the male groove and the female groove respectively can be equalised in this manner, it is only the total distances. At certain instantaneous moments the velocities over the surface of the respective grooves on which a particular ball is travelling will not always be equal.

This occurs because the flanks of the waves on the swashing male member are not always on the same median line, whereas the arcuate grooves on the female element are. In order to compensate for this, the depth at which the ball contacts the walls of the circumferential wavy groove in the male member and the depth at which the balls contact the walls of the circumferential groove in the female member can be varied. The balls can thus be made to rise in one groove and fall in the opposing groove at any point in each swashing cycle. Thus, whilst in the symmetric configuration, the balls still stay at any instantaneous moment on a median line, they are continually moving radially in and out from the geometric swash centre of the swashing male member, which is a part-sphere and also radially in and out from the centre point of the female member, which is a part-spheroid. The thickness of the cage wall is sufficient to keep the balls in their grooves swashing in a true median line. Thus by varying the cross-sectional profile of the grooves, the balls can be made to rise and fall in the grooves, thereby varying their instantaneous precession rate. This is illustrated in Figure 12 which shows three examples of the condition just described. In this figure, a swashing male member 301 is inside a female stator 302 with cages 303 between them with slots 304 for balls 305. The groove on the left in the female member in the figure is shallower than the opposing groove in the male member. The contact point in the female groove is shown at 306 which is at a shallower depth than the contact point in the male groove shown at 307. In the centre of Figure 12, the conditions are reversed, there being a deeper groove in the female member, where the contact point is at 308, this being deeper than the contact point 309 in the groove in the male member. At the right hand side of the figure, the contact points 310 and 311 in the female and male member groove are at about equal depths. It should be noted that the thickness of the cages 303 is sufficient that, even though the balls rise and fall in the grooves, they still present a full diameter across the slots 304 in the cage. Thus the cage can still keep the balls swashing on the true median line. The lines 312 in Figure 12 are the diametric lines along which the opposing reaction forces act through the balls from the flank of the groove on the female stator to the flank of the groove on the swashing male member.

It will be noted that each of the motion transmitting devices described has a frame with two shafts.

-73-

Any one of these three members may be fixed and the other two members may then constitute the input and the output. The mechanisms are reversible so that step-up or step-down speed ratios may be obtained.

Figures 13, 14, 15, 16 and 17 are diagrams illustrating different embodiments of angled motion transmitting couplings. Referring to Figure 13, there is shown a coupling having a female stator with eight axial grooves and a male element with nine waves. Stator bearings 401 carry an input shaft 402 driving a female element 404. An output shaft 403 is supported in stator bearing 409 such that the input and output shaft axes are non-parallel, intersecting at an angle. The female element 404 has eight axial grooves 405. A male element 406 on the output shaft 403 has a circumferential groove 407 with nine waves. Eight balls 408 engage in the axial grooves 405 and wavy groove 407. The wavy grooves and co-operating axial grooves are similar to those of previously described embodiments. For example, the material at the peaks of the waves of the wavy grooves may be removed to a predetermined distance radially inwardly. The coupling is designed with the wavy groove on the male element and axial grooves of the female element to equate the surface distances that the balls are in rolling contact with the male and female elements whilst still maintaining their required path. Also, as previously described, the cross-sections of the grooves in the male and female elements can be arranged to cause the balls to rise and fall in the grooves, thereby enabling the instantaneous rolling velocities to be equalised. It is thus possible to obtain pure rolling motion and hence high efficiency.

In practice however, it has been found that, by appropriate selection of the radii of the swashing spherical surfaces and of the ratio of the swash angle of the median path of the balls to the relative swash angle of the male and female elements, and by cropping the crests of the waves, it becomes unnecessary to vary the cross-section of the grooves.

The balls are caused to precess in what may be described as a swashing motion in a plane bisecting the angle between the axes of the input and output shafts. As previously explained, depending on whether the input is the male or the female element, the speed difference between the output and the input is either $\frac{1}{8}$ or $\frac{1}{9}$ of the input speed.

A cage may be provided to constrain the balls to remain in this plane and such a cage may be positively restrained on its swashing plane relative to the male and female elements by separate controlling means. However such a cage and cage drive are not essential because the balls are constrained by the axial and wavy grooves to remain in this plane.

Although the embodiment of Figure 13 has been described as having eight balls, it will operate if one or more balls are missing. The corresponding axial groove may also be omitted. It is obviously preferable to have all the balls present in order to obtain maximum power transmission and thus to have a smaller assembly for a given power rating.

Although the joint of Figure 13 has been described using the female element as the input and the male element as the output, the device is reversible and thus the input and output can be interchanged.

A whole range of predetermined angled joints may be made, these angles being a function of the depth of the waves on the circumferential wavy groove and the number of waves (ratio). Exactly the same may be achieved with the compound configuration that has been previously described.

Two constant velocity joints, such as are shown in Figure 13 may be coupled together to form a torque transmitting assembly. Figure 14 shows one such construction using two joints of equal ratio connected back to back on an angled interconnecting shaft. In this figure an input bearing 421 supports an input shaft 422 carrying a female element 424. This co-operates with a male element 423 on an angled interconnecting shaft 428 carrying a male element 426' co-operating with a female element 424' on an output shaft 427 carried in an output bearing 429. The input and output shafts 422,427 are parallel. The joints are of equal ratio but back to back so that the rotational speeds of the input and output shafts are parallel.

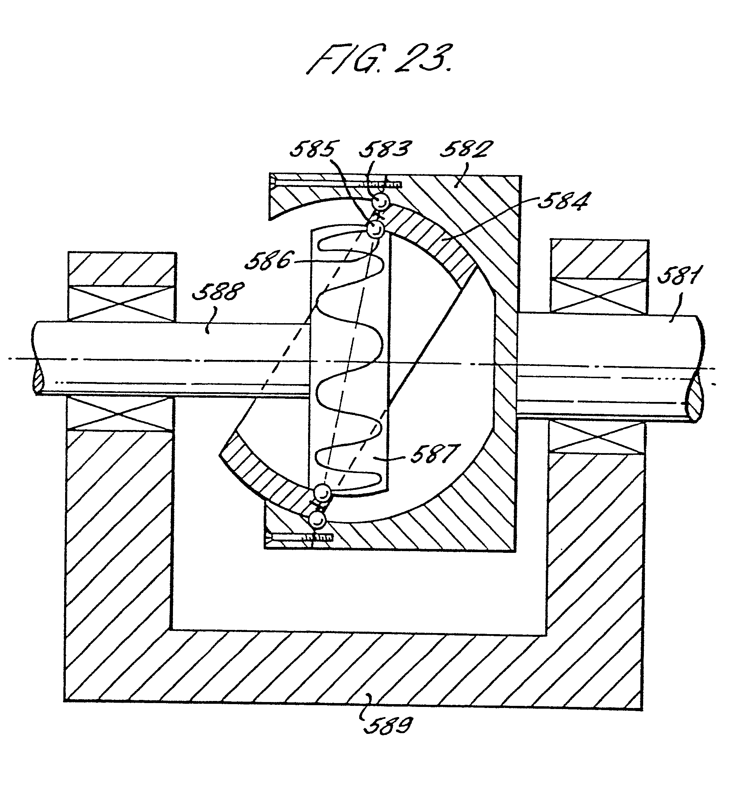

Figure 15 shows two joints connected so that their respective ratios are added to each other to increase the difference in speeds of the input and output shafts. An input bearing 431 carries an input shaft 432 and an output bearing 439 carries an output shaft 433. The first joint has a female element 434 connected to the input shaft 432 and a male element 436, connected by an angled connector shaft 438 to the female element 434' of the second joint. A male element 436' of the second element is connected to the output shaft 433.

-77-

It is not necessary to have any cage for the balls in the above-described joints because the wave angle of the circumferential wavy groove can be made greater than the deflection angle of the joint. In this way the groove on the female and the groove on the male wave never become parallel at any point in the rotational cycle and thus never form a tunnel down which the balls could roll, which would cause the joint to lock solid. In the event that it is preferred to retain a cage for the balls, since the deflection angle of the cage is always half the deflection angle of the shaft and the deflection angle of the joint is constant, it becomes very simple to positively control the deflection angle of the cage without having to rely on the intersection points of the axial grooves in the female element and the circumferential wavy groove in the male element.

Since one side on the outer surface of the cage will not be covered by the female element at the external angle of the joint, by simply incorporating a circumferential groove at the side and on the external surface of the cage, a stator guide with a roller attached to it can turn in this groove and keep the deflection angle of the cage constant.

Depending on which shaft is driven, the male or the female, the output ratio will always be either 1 plus a fraction or 1 minus a fraction. The magnitude of this fraction depends on the number of grooves and the number of waves in the wavy groove. The rotational speeds of the male and female elements differ and, since the fraction is expressed as a fraction of the input speed, the numerical value of the fraction depends on which element is designated as the input.

For example, where the female stator had eight axial grooves on it, there were eight balls and nine waves on the male element, and a ratio of 9:1 is obtained, then in the coupling configuration, depending on whether the male or the female is the driven input, the speed difference between the input and output is either $\frac{1}{8}$ or $\frac{1}{9}$ of the input speed.

Figure 16 shows one example of the above configuration. Support bearing 441 carry an input shaft 442. An output shaft 443 is supported in bearing 441'. The joint has a female element 444 and a male element 445 with balls in a cage 446. A circumferential groove 449 in the cage is engaged by a roller 447 fixed on shaft 450 which is bearingly mounted on a stator support 448, which roller rolls in the groove 449.

Figure 17 shows a compound configuration. Support bearings 451 carry an input shaft 452 and an output shaft 453. The joint has a female element 454 with seven waves on a circumferential wavy groove 457. Eight balls 458 engage this groove 457 and also engage nine waves on a circumferential wavy groove 456 on a male element 455.

It will be apparent that ratios of about 2:1 where a compound unit is used at each end of the angled shaft and where these two compound units ratios are multiplicably combined , down to ratios of about 1:0.95 for a single simplex unit where there are twenty axial grooves on the female, twenty balls and twenty-one waves on the circumferential wavy groove typically represent the approximate ratio range which can readily be obtained with these drive units.

In the constructions of Figures 13 to 17, as in the earlier described arrangements, instead of or in addition to having a symmetrical circumferential wavy groove, the male member may have asymmetric circumferential wavy grooves disposed on lesser circles of the male element. Provision of a plurality of wavy grooves in this way, with the corresponding increased number of balls, results in an increase in the torque handling capacity for a given size of joint.

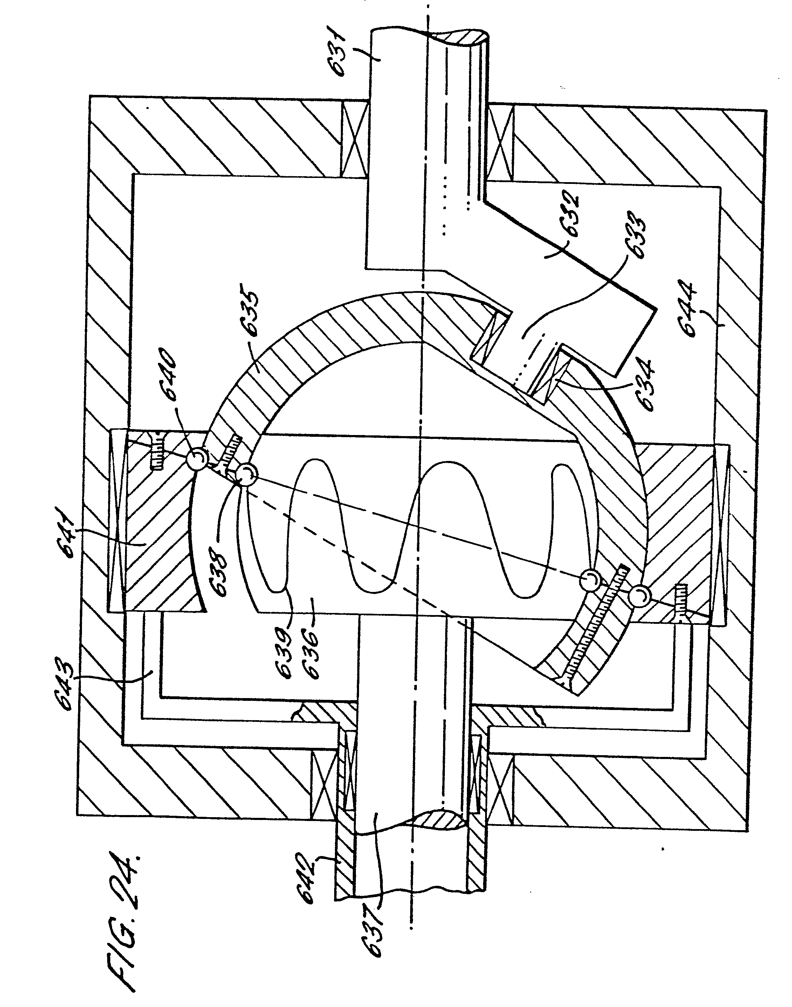

In some of the examples described above, the axial wave drive unit has a constant velocity joint to bring the swashing rotating output back to the axis of the drive or, in the case when the swashing element is not rotating, the constant velocity joint is used to lock it to earth. With high deflection angles, constant velocity joints become highly inefficient so that the efficiency of the axial wave drive unit is dissipated or partly dissipated in the constant velocity joint. This problem is overcome by the construction shown in Figure 18 in which a second axial wave drive unit is used to bring the drive from the swashing element of a first axial wave drive unit to a rotatable output element.

-81-

Referring to Figure 18, there is shown an axial wave drive unit having an input shaft 501 connected to a crank 506 with a bearing stud 507 running in roller bearings 508 in a part spherical male/female element 505. The stud 507 is at an angle, in this case about 30°, to the axis of the input shaft 501 so that the stud causes the element 505 to perform a swashing motion when shaft 501 is rotated. This swashing action moves part-spherical element 505 between an outer female stator 503 and a rotating output male element 504 which is connected to an output shaft 502. A circumferential wavy groove 513 on the output male element 504 and radial grooves 514 on the inside of the male/female part-spherical element 505 are engaged by balls 510. There is an even number of radial grooves 514 which number is divisible by four and there is an odd number of waves, either one more or one less than the number of radial grooves in the wavy groove 513. The number of balls 510 is equal to the number of radial grooves 514. These balls roll in the radial grooves and in the circumferential wavy groove 513 in the manner described in the aforementioned description. The male/female element 505 and male element 504 thus constitute a first axial wave drive unit. A second unit is formed by a female stator 503 having radial grooves 511 in which balls 509 engage, these balls also engaging in the circumferential

0048593

-82-

wavy groove on the exterior of the part-spherical swashing male/female element 505. The number of radial grooves 511 is divisible by four and the number of waves in the wavy groove is odd and is either one more or one less than the number of grooves 511. The number of balls is conveniently equal to the number of radial grooves although, as described in the aforementioned specification, the device would be operative if one or a few of the balls were missing. Since the female stator 503 is fixed, and since the part-spherical male/female swashing element 505 can rotate relative to the stator 503, the male output element 504 and input shaft 501, the drive ratio between the input shaft 501 and the output shaft 502 is a compound ratio of the ratios of the outer stage axial drive unit and the inner stage axial drive unit. The two ratios can be multiplied or divided, one by the other depending if the precessions of the two sets of balls 509 and 510 relative to the circumferential wavy grooves 512 and 513 are in the same direction or in opposite directions. It will be immediately apparent that, by such a construction, using different ratios for the two axial wave drive units, a very wide range of speed ratios between the input and output shafts may be obtained.

For clarity in Figure 18, no cages have been shown for the two sets of balls but such cages may be provided as described previously.

Figure 19 illustrates a construction using spindles located in needle bearings in one of the members. This use of spindles in bearings can be employed in systems having two axial wave drive stages. Figure 19 illustrates how the construction of Figure 18 can be modified in this way. In Figure 19 the same references are employed as in Figure 18 indicating corresponding components and, in the following description reference will only be made to the descriptive features of Figure 19. The male member 504 has a wavy groove 522 engaged by a series of spindles 520 in needle bearings 521 arranged around a great circle on the inner surface of the part-spherical male/female element 505. A second set of spindles 523 in bearings 524 carried in the outer female stator 503 engages a wavy groove 525 in the outer surface of the element 505. As in the construction of Figure 18, a compound ratio between the spindles of input shaft 501 and output shaft 502 is obtained, the two ratios being modified or divided depending on the relative directions of precessions of the two sets of spindles in the groove. In the case of spindled configurations, the number of stations for each set of spindles only has to be even and need not be divisible by four.

Another angle drive joint is shown in Figure 20.
This is a two stage angle joint with both stages in the
same angle joint instead of two separate joints. This
makes it possible to obtain twice the deflection angle
and the speed change ratio can be multiplied or divided.
An output shaft 531 is attached to first part spherical
male element 532 on which is cut a circumferential
wavy groove 530 in which balls 537 turn. A hollow part-
spherical female and male element 533 carries internal
arcuate grooves 538 and an external circumferential wavy
groove 539. Grooves 538 mesh with balls 537 and the
external grooves 539 guide balls 536 which mesh
with arcuate grooves in a hollow female part spherical
member 536 attached to an output shaft 535. Cages for
the two sets of balls are omitted for clarity. The
two shafts 531, 535 are supported by bearings 540
in a frame 541 constituting the stator of the assembly.

In the construction of Figure 20, the two planes
defined by the two sets of balls always swash at an
angle to one another. This angle does not change and the
two planes intersect at the centre point of the system.

From the two stage angle drive joint, there emerges
some significant teaching. It becomes possible to make
an infinitely variable angle, speed changing drive joint,
the angle being variably cylindrically through about 160°,
e.g. 80° either side of the direction of the axis of a
concentric input output shaft configuration.

-85-

To explain how this can be done, consider two parallel shafts which are significantly displaced from each other but in the same plane, if these shafts are connected to one another through two single stage angle drive units and an intermediate connecting shaft, each angle drive unit with a deflection angle of $40^{\circ}$ or the complement to it, i.e. $140^{\circ}$ and if the housing of one of the angle drive units is rotated through $180^{\circ}$ to the axis of the connecting shaft, the two parallel shafts will then be inclined relative to each other at an angle of $80^{\circ}$ and will no longer be parallel to each other. If the length of the connecting shaft is reduced to zero, you then, in effect, have a two-stage angle drive joint with infinitely variable angles possible between the input and output shafts. This is achieved by an outer female member with a concentric inner male member and an intermediate male/female part sphere. The male/female swashing sphere has, in effect, become the inclined shaft between the two single stage angle drive joints. It is preferred for an inclined thrust plate with a ball thrust bearing to be incorporated, which can be locked at a predetermined radial position, can bear against the male/female sphere to prevent the latter from any inclination to swash instead of to rotate. The housing of the input and output shafts can be hinged relative to each other with the hinge axis passing through the centre point of the male/female sphere. In order to change the angle of the joint, the inclined thrust plate is rotated about the axis of the input shaft until the desired angle is obtained and then locked to the stator housing.

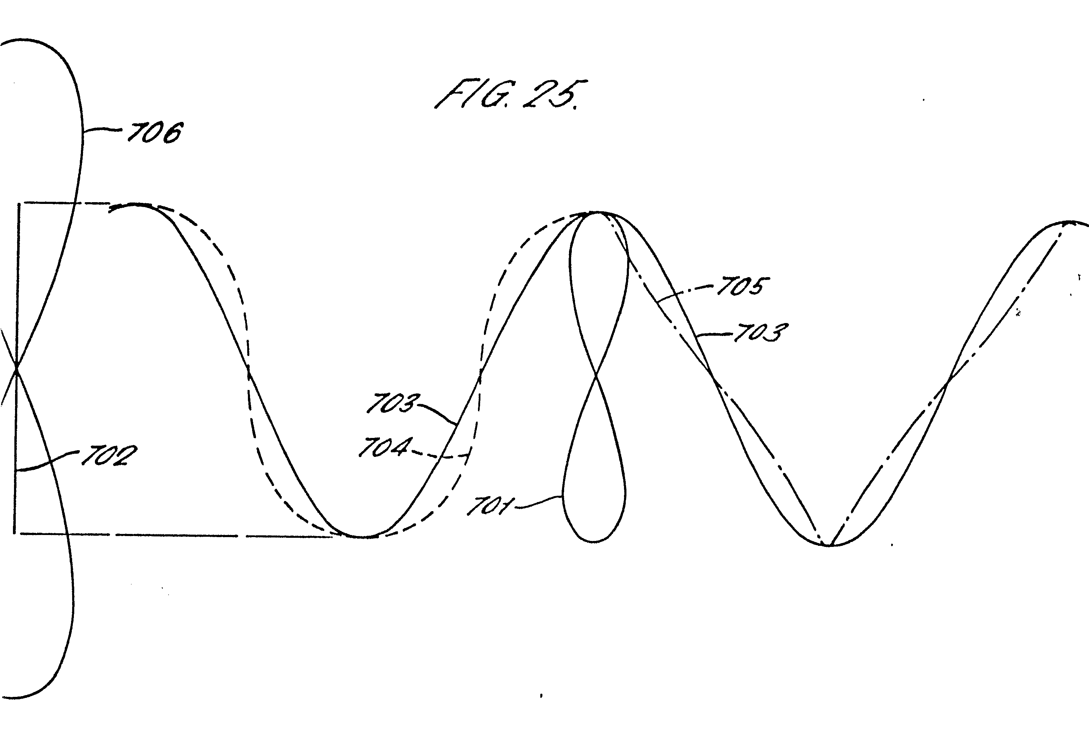

Figures 21 and 22 illustrate this variable angle speed changing drive in two different angular positions. For convenience in illustration, Figure 21 is a plan view of the joint showing the angularly deflected state whilst Figure 22 is an elevation of the joint when the input and output shafts are aligned. A roller bearing 551 in a stator housing 552 supports an input shaft 553 and supports also a concentric inclined thrust plate tube 554. The inclined thrust plate tube 554 is connected to an inclined thrust plate 555. The inclined thrust plate tube 534 has a control arm 556 and a locking screw 557 to enable the thrust plate tube 554 to be locked in any required angular position. A shoulder 558 in the tube 554 and a ball thrust bearing 559 prevent any axial movement to the left of the inclined thrust plate 555.

The input shaft 553 is connected to a male part-spherical 560 on which is cut a circumferential wavy groove 561 in which run balls 562. A male/female part sphere 563 engages the balls 562 in arcuate grooves on the female side. A ball thrust race 564 runs between one side of the male/female part sphere 563 and a face of the inclined thrust plate 555. A female part-spher 565 attached to an output shaft 566 has arcuate grooves, with balls 567 which in turn mesh with a circumferential wavy groove on the male surface of the male/female part-sphere 563. The cages for the balls 567 and 562 are omitted for clarity. An output shaft 566 runs in a roller bearing 568 in a swing housing 569. This swing housing 569 is pivotally connected to the stator housing 552 by two sets of hinge plates 570 which pivot about a hinge pin 571.

In order to alter the angular direction of the axis of the output shaft 566 relative to that of the input shaft 553, the control arm 556 is rotated about the axis of input shaft 553 and locked in the desired position by the locking screw 557. It will be seen that this torque converter thus provides a drive between shafts angularly adjustable in position.

Each axial wave drive stage in the construction of Figures 21 and 22 can be compound or simplex configuration and the drive ratios can be chosen so that the input shaft and output shaft have the same speeds, or the output can be slower or faster than the input shaft. High efficiency of drive is obtainable because of the pure rolling motion between all torque transmitting elements, regardless of the relative angle of inclination between the input and output shafts.

Further configurations of the two-stage device become possible. If we consider the configuration as shown in Figure 18, let us dispense with the input shaft 501 crank 506 and stud 507 and instead, use stator 503 as the input shaft. If the input shaft is rotated, it will at once cause the male female part
sphere 505 to swash.  However, it will also cause the
output shaft 512 to rotate since it is also swashing
relative to male sphere 504.  The output speed of the output
shaft relative to the input speed will be a ratio
from the divided or multiplied speed of the two stages.

Figure 23 shows this configuration.  An input
shaft 581 is attached to a female part sphere 582
which has arcuate grooves meshing with balls 583 which
balls mesh in a circumferential wavy groove on the male
surface of a male/female part sphere 584.  The female
surface of part sphere 584 has arcuate grooves which
mesh with balls 585 in a circumferential wavy groove 586
on a male part sphere 587.  The part sphere 587 is
attached to an output shaft 588 bearingly mounted in a
stator housing 589 as also is the input shaft 581.

Where it is desired to have two concentric output
shafts, particularly when it is required that they rotate
in opposite directions and at equal speeds as for
example in contra-rotating propeller drives in marine,
helicopter and airplane applications, this can easily be
done by a simple modification to the configuration in
Fig. 18.  The stator 503 becomes the second output shaft.
The waves on the male/female swashing element 505 are
arranged to give reduction ratios running in opposite
directions.  If these ratios are equal, and so long as the torque being applied to each output shaft is equal then the male/female member will only swash and not rotate. However, if the ratios are different and/or the torque being applied to each output shaft is different, then the male/female part sphere will not only swash but it will also rotate, in order to compensate, so the device becomes a torque divider as well as a speed reducer.

Figure 24 shows the above configuration. Input shaft 631 rotates crank 632 and stud 633 in bearing 634 gyrates male/female part sphere 635 and causes it to swash about part sphere male element 636 which is attached to first output shaft 637. Female surface of male/female part sphere 635 meshes with balls 638 through arcuate grooves on its female surface and circumferential wavy groove 639 on element 636. Balls 640 cause arcuate grooves in a part spherical female element 641 to mesh with circumferential wavy groove on male/female part sphere 635. A second output shaft 642 is attached through bell housing 643 to part spherical female element 641 which is bearingly mounted with said second shaft 642 and input shaft 631 in stator housing 644.

It will also be readily apparent by examining Figure 19 that the spindle configuration replacing the balls and arcuate grooves can be used as an alternative in all the arrangements described with reference to Figures 20 to 24.

From the description of Figure 24, it will be apparent that this configuration can also be employed as a six speed-ratio gear box. The assembly has three shafts. If any one shaft is the input, one of the other shafts may be clutched to the stator and the remaining shaft can be the output shaft. Also, depending on the configuration of the two axial wave drive stages, reverse rotation may be obtained.

In all the devices described above torque is transmitted through a plurality of meshing elements e.g. balls in spindles. In hypocycloidal speed reducers where multitooth engagement is obtained as in the prior quadrant drive configurations, greatly increased torque capacity becomes possible because of the multitooth engagement. The limitation to torque handling capacity then becomes not the quadrant drive itself but the capacity of the eccentric bearing supporting the gyrating gear. The quadrant drive has a capacity which is about three times greater than the largest bearing that can be accommodated within the gyrating gear on the eccentric shaft.

This problem doesn not arise in an axial wave drive configuration described above since the main ball bearing is part of the main torque transmitting element between the stator and the rotor, and the balls are themselves the torque transmitting elements, and are so disposed about the swashing rotating sphere that all radial and axial

-91-

loads on each half of the swashing cycle are equal and opposite. This results in greatly reduced loads on the input and output shaft bearings.

Although a number of constructions using balls have been described, in all simplex constructions it is possible to use spindles instead of balls, as described for example with reference to Figures 9 and 19. With spindles mounted in roller bearings, it is not necessary to equalise the rolling velocities over spherical surfaces. Spindles can thus be put in the male or female member. Using spindles, the angle of swash for a given wave height is halved since each spindle is stationary. Also, only an even number of stations for spindles is required and the number need not be divisible by four.

In a simplex construction, whether using balls or spindles, the length of the arcuate grooves on the female member need not necessarily be equal to the height of the wave on the male member but can be longer or shorter. It is possible to have them shorter than the wave height since the shape of the wavefront can be modified as previously described to give the appropriate path length.

In a compound configuration, if the deflection angle of the balls is more or less than half the angle of swash of the swashing means, the wavefront has steeper or flatter waveform and it is possible to have the waves on the male of a different height from those on the female.

CLAIMS:-

1. Motion transmitting apparatus comprising a male member, a female member, swashing means and a plurality of freely rotatable meshing elements between part-spherical surfaces of the male and female members, the meshing elements engaging in an endless wavy groove in a part-spherical surface of at least one of said members, which groove is arranged so that relative swashing motion of the male and female members causes the meshing elements to precess along the wavy groove, whereby torque is transmissible between said members through said meshing elements, said meshing elements being freely rotatable in the other member or in rolling engagement therewith.

2. Motion transmitting apparatus as claimed in claim 1 wherein the meshing elements are balls and wherein said wavy groove has a number of waves which differ by unity from a multiple of four.

3. Motion transmitting apparatus as claimed in claim 1 wherein the meshing elements are spindles

-93-

journalled in roller bearings in said other member and wherein the wavy groove on the said one member has an odd number of waves.

4. Motion transmitting apparatus as claimed in claim 2 wherein the balls are arranged to roll each in a separate arcuate groove on the part-spherical surface of said other member.

5. Motion transmitting apparatus as claimed in claim 2 wherein the balls are arranged to roll in an endless wavy groove extending around the part-soherical surfaces of said other member and having a number of waves also differing by unity from the aforesaid multiple of four, the numbers of waves in the grooves on the two members differing by two.

6. A motion transmitting device including

(a) swashing means,

(b) meshing means in the form of a series of independently movable meshing elements whose centres are constrained to remain on the circumference of a swashing circle,

(c) swash plate means formed with a circumferential wavy groove, said groove being partially complementary to said meshing elements,

(d) a series of individual movement-limiting means, incorporated in a datum means, wherein said swashing means is disposed to cause said meshing elements to precess around said circumferential wavy groove in said swash plate means, each of said individual movement-limiting means guiding in captive dependency always the same individual meshing element within specific limits of arcuate oscillating motion, said arcuate oscillating motion of the centres of said individual meshing elements being in two degrees of freedom of linear motion relative to each of said individual movement-limiting means, but being in three degrees of freedom of linear motion relative to said swash plate means.

7. A device according to claim 6, wherein said meshing elements are in circumferential slots in a circular cage.

8. A device according to either claim 6 or claim 7 wherein said meshing elements are balls.

9. A device according to claim 8 wherein said datum means comprises a datum member having a plurality $n$ of predetermined stations on a plane through the centre of swash at right angles to the axis of operation of the swashing plane, this plane being the midpoint of the axial movement of any point on the swash plane, where $n$ is an integral multiple of four, said stations being evenly spaced around the centre of swash, any number of or all of said stations being the site for an arcuate concave groove disposed radially about and on median lines of an internal surface of a part sphere, which grooves constitute said movement-limiting means and wherein said meshing elements are balls partly recessed in said arcuate concave grooves, said swash plate means being in the form of a part-sphere incorporating said circumferential wavy groove, said balls constituting said meshing elements being partly recessed in said circumferential wavy groove, said swash plate means being swashed by said swashing means, the number of waves on said circumferential wavy groove being ($\underline{n}$-1) or ($\underline{n}$+1), said balls being caused to precess around said circumferential wavy groove by the swashing motion of said swash plate relative to said datum member, caused by said swashing means and said swash plate means rotating relative to said datum member because of the precessing balls.

10. A device according to claim 9 wherein said swashing means are an input and said swash plate means are an output.

11. A device according to any of claims 7 to 9 wherein said balls are arranged to swash on a median line through an angle half the angle of swash of said swash plate means.

12. A device according to any of claims 7 to 9 wherein said balls are arranged to swash on a median line through an angle less than half the angle of swash of said swash plate means.

13. A device according to any of claims 7 to 9 wherein said balls are arranged to swash on a median line through and angle less than the angle of swash of said swash plate means but more than half the angle of swash of the swash plate.

14.   A device according to either claim 9 or claim 10 and wherein said meshing means in the form of a plurality of said balls are disposed in individual circumferentially disposed slots in a circular cage, the cage being a second movement limiting means disposed between said datum means and said swash plate means.

15.   A device according to either claim 9 or claim 10 wherein said circumferential wavy groove has been generated from a moving point on the part-spherical surface of said swash plate means, said moving point being a tangent to a median line of said part-spherical surface at all times.

16.   A device according to either claim 14 or claim 15 wherein said second movement-limiting means maintains said meshing elements on the path of a median line.

17.   A device according to claim 16 wherein said second movement-limiting means swashes at half the angle of swash of said swash plate means.

18.   A device according to claim 16 wherein said second movement-limiting means swashes at an angle which is less half the angle of swash of said swash plate means.

19. A device according to claim 16 wherein said second movement-limiting means swashes at an angle which is less than the angle of swash of the swash plate means but more than half the angle of swash of the swash plate means.

20. A device according to any of claims 17 to 19 wherein said second movement-limiting means is swashed by second swashing means.

21. A device as claimed in any of claims 6 to 16 wherein said datum member is swashed by third swashing means at the same but opposite angle to said swash plate means, said datum means being prevented from rotating by second datum means.

22. A device as claimed in any of claims 6 to 21 wherein there are a plurality of circumferential wavy grooves, being asymmetrically disposed about said swash plate means, but where the waves of each circumferential wavy groove are circumferentially in phase with each other and where there is a similar number of sets of said meshing elements.

23. A device as claimed in any of claims 6 to 21 wherein said circumferential wavy groove is asymmetrically disposed on a said part-spherical surface of said swash plate means.

0048593

-99-

24. A device as in any of claims 6 to 22 wherein one circumferential wavy groove is symmetrically disposed and one or more circumferential wavy grooves are disposed asymmetrically about said swash plate means.

25. A device as claimed in claim 21 in which said third movement-limiting means is attached to said second datum means.

26. A device as in any of claims 6 to 25 in which there is a second circumferential wavy groove on said first datum means, said second circumferential wavy groove having a plurality of waves whose number differs by two from the plurality of waves on said first circumferential . wavy groove, said number of waves being odd in each case, the number of waves in one case being $(n-1)$ and in the other case by $(n+1)$ where $n$ is an integral multiple of four, said second circumferential wavy groove now constituting said first movement-limiting means, said meshing elements now precessing both in said first circumferential wavy groove and in said second circumferential wavy groove, but in opposite directions and at different radial speeds relative to the datum means and the swash plate means.

27. A device as claimed in claim 26 and having $n$ meshing elements.

28. A device as claimed in any of claims 6 to 27 wherein all of said meshing elements are meshing all of the time.

29. A device as claimed in any of claims 6 to 28 where all the said meshing elements when drivingly engaged roll between said datum means and said swash plate means.

30. A device as claimed in claim 9 or any of claims 10 to 27 as appendent to claim 9 wherein the material at the peaks of the waves is removed on the said circumferential wavy groove to a predetermined point radially inward.

31. A device as claimed in any of claims 6 to 30 wherein said second movement-limiting means consists of two circular parallel rails whose correct axial disposition to each other is maintained by a plurality of separate connector bridges which pass above or below the path of the said meshing elements so that said meshing elements may precess about said second movement-limiting means.

32. A device as claimed in any of claims 6 to 31 wherein said meshing elements can move radially inward or radially outward from the geometric swash centre of said swash plate means under controlled conditions and by predetermined amounts, as said meshing elements

-101-

precess about said circumferential wavy groove, to reduce the difference in the rolling velocities of the balls in the arcuate groove and circumferential wavy groove.

33. A device as claimed in claim 6 but wherein the said meshing elements are fixed to said first datum means and have no freedom of motion.

34. A device as claimed in claim 33 wherein said meshing elements are spindles whose axes of rotation are disposed on radial lines about said datum means.

35. A device as claimed in either claim 33 or claim 34 wherein the number of waves in said circumferential wavy groove is $(n-1)$ or $(n+1)$ where $n$ is an even number.

36. A device as claimed in claim 24 wherein the number of meshing elements is $n$.

37. A device as claimed in any of claims 35 to 36 wherein there is a plurality of wavy circumferential grooves with a similar plurality of sets of said fixed meshing elements.

38. A motion transmitting device comprising
(a) an input, an output and datum means, one of which
    is a first shaft, another of which is a
    second shaft and the third of which is a frame, said first and second shafts being separately relatively rotatable with respect to the frame about a common axis,

(b) a male member and a female member, at least one of which members is angularly movable about orthogonal axes which are orthogonal to and intersecting said common axis at a common centre,

(c) one of said male and female members being coupled to said first shaft by first coupling means and the other of said male and female members being either the frame or coupled to said second shaft by second coupling means,

(d) the coupling means for the or each of said male and female members which is angularly movable about orthogonal axes including swashing means,

(e) a plurality of meshing elements between the male and female members, said meshing elements being located on one of said members by a circumferential guide having waves, the number of waves being $(n-1)$ or $(n+1)$ where $n$ is an integral multiple of four, and said meshing elements being constrained by the other of said members to be each at any or all of the respective ones of a plurality of locations,

(f) said locations (i) being points arcuately spaced $\frac{360}{n}$ degrees apart on a part-spherical s surface around said common centre, or (ii) being guides along arcs of median lines on a part-spherical surface about said common centre, which median lines pass through said points, or (iii) being wavy circumferential guides of the same wave amplitude as the waves of said one member with the median lines of the waves passing through said points, each wavy circumferential guide extending around a part-spheroid of said other member, the number of waves around the circumference being $(n+1)$ or $(n-1)$ according as the number of waves on said one member is $(n-1)$ or $(n+1)$ so as thereby to differ by two therefrom,

whereby the meshing elements form a coupling between the male and female members, causing one to precess relative to the other with simultaneous relative swashing motion and so causing one shaft to rotate relative to the other and so thereby transmitting rotary motion from said input to said output at a changed speed.

39. A motion transmitting device as claimed in claim 38 wherein there are $n$ meshing elements.

40. A motion transmitting device as claimed in claim 38 wherein there are fewer than n meshing elements at the predetermined stations.

41. A motion transmitting device as claimed in any of claims 38 to 40 wherein the meshing elements are balls.

42. A motion transmitting device as claimed in claim 41 wherein said guides on said one of said members are grooves in a part spherical surface.

43. A motion transmitting device as claimed in either claim 41 or claim 42 wherein the other of said members has guides along arcs of median lines (great circles), which guides are grooves in a spherical surface.

44. A motion transmitting device as claimed in either claim 41 or claim 42 wherein the other of said members has wavy circumferential guides formed by wavy grooves.

45. A motion transmitting device as claimed in any of claims 38 to 44 wherein a cage is provided for said balls.

46. A motion transmitting device as claimed in claim 6 wherein the meshing elements are fixed in said one of said members.

47. A motion transmitting device as claimed in claim 47 wherein the meshing elements are journalled in bearings in said one of said members, each bearing having an axis passing through said common centre.

48. A motion transmitting device as claimed in either claim 46 or claim 47 wherein the meshing elements are located in the female member to engage grooves in the male member.

49. A motion transmitting device comprising

(a)   first and second co-axial shafts separately relatively rotatable with respect to a datum about a common axis,

(b)   a male member and a female member, one of said male and female members being angularly movable with respect to the datum and with respect to the other about orthogonal axes which are orthogonal to and intersect said common axis at a common centre, but restrained against rotation with respect to said first shaft about said common axis,

(c) said one of said male and female members being connected to said first shaft by a coupling including swashing means, the other of said male and female members being connected directly to said second shaft.

(d) a plurality of meshing elements between the male and female members, said meshing elements being located on one of said members by a circumferential guide having waves, the number of waves being $(n-1)$ or $(n+1)$ where $n$ is an integral multiple of four, and said meshing elements being constrained by further guide means on the other of said members, said further guide means comprising a plurality of guides passing through locations arcuately spaced $\frac{360}{n}$ degrees apart on a part-spherical surface around said common centre, and either being guides along arcs of median lines (great circles) on a part-spherical surface about said common centre, which median lines pass through said locations, or being wavy circumferential guides of the same wave amplitude as the waves of said one member with the median lines of the waves passing through said locations, each wavy circumferential guide extending around a part-spheroid of said other member, the number of waves around the circumference being $(n+1)$ or $(n-1)$ according as the number of waves on said one member is $(n-1)$ or $(n+1)$ so as thereby to differ by two therefrom, whereby the meshing elements form a coupling between the male and female members, causing one to precess relative to the other with simultaneous relative swashing motion and so causing one shaft to rotate relative to the other and so thereby transmitting rotary motion from said input to said output at a changed speed.

50. A motion transmitting device comprising

(a) first and second co-axial shafts separately relatively rotatable with respect to a datum about a common axis,

(b) a male member and a female member, one of said male and female members being angularly movable with respect to a datum and with respect to the other about orthogonal axes which are orthogonal to and intersect said common axis at a common centre but is restrained against rotation with respect to said second shaft about said common axis,

(c)   means securing the other of said male and female members with respect to said datum,

(d)   said one of said male and female members being drivingly connected to said first shaft by a coupling including swashing means, and being drivingly connected to the second shaft by coupling means constraining the second shaft and member to rotate together about said common axis whilst permitting relative movement about the orthogonal axis,

(e)   a plurality of meshing elements between the male and female members, said meshing elements being located on one of said members by a circumferential guide having waves, the number of waves being $(n-1)$ or $(n+1)$ where $n$ is an integral multiple of four, and said meshing elements being constrained by the other of said members to be each at any number of or all of respective ones of a plurality of locations, said locations being points arcuately spaced $\frac{360}{n}$ degrees apart on a part-spherical surface around said common centre,

whereby the meshing elements form a coupling between the male and female members, causing the second shaft to precess relative to the first shaft.

51. A motion transmitting device as claimed in either claim 49 or claim 50 wherein the meshing elements are balls and wherein said guides are grooves.

52. A motion transmitting device as claimed in claim 38 wherein the meshing elements are balls and wherein said guides are grooves, the guides on opposing surfaces of the male and female members having depths and profiles varying along their lengths in a complementary manner such as to reduce the difference in rolling velocities on the grooves on the opposed surfaces.

53. A motion transmitting device as claimed in either claim 49 or claim 50 wherein the male member has a circumferential wavy guide in the form of a groove or grooves and wherein the female member has guides in the form of arcuate grooves.

54. A motion transmitting device as claimed in either claim 49 or claim 50 wherein the male member has $(n+1)$ wavy circumferential guides and the female member has $(n-1)$ wavy circumferential guides.

55. A motion transmitting device comprising a constant velocity speed changing drive coupling having a constant deflection angle between its input and its output and where the constant speed of the output is different from the constant speed of the input, said drive coupling consisting of a male and female element, said female element having a plurality of axial grooves on the internal part spherical surface of said female element, said number of axial grooves being even, the same number of independently movable meshing elements, said number being divisible by four, said male element having a circumferential wavy groove disposed about the external surface of a part sphere of said male element, the number of said waves on said circumferential wavy groove being odd and one more than or one less than said number of independently movable meshing elements, said meshing elements engaging in said axial grooves and said circumferential wavy groove simultaneously, thereby connecting said male and female elements, said male and female elements also being said input and output.

-111-

56.   A motion transmitting device including

(a) meshing means in the form of a series of independently movable meshing elements whose centres are constrained to remain on the circumference of a swashing circle relative to a male and a female element,

(b) said male element being formed with a circumferential wavy groove, said groove being partially complementary to said meshing elements,

(c) a series of individual movement-limiting means, incorporated in a female element, whereby said meshing elements are caused to precess around said circumferential wavy groove in said male element, wherein said male and female elements rotate relative to each other at different speeds and at different intersecting axes, each of said individual movement-limiting means guiding in captive dependency always the same individual meshing element within specific limits of arcuate oscillating motion relative to said female element, said arcuate oscillating motion of the centres of said individual meshing elements being in three degrees of freedom of linear motion relative to said male element, one of said male and female elements being the input and the other the output.

- 112 -

57. A device according to claim 56, wherein said meshing elements are. in circumferential slots in a circular and part-spherical cage.

58 A device according to either claim 45 or claim 57, wherein said meshing elements are balls.

59. A device according to claim 58 wherein said female element has a plurality $n$ of predetermined stations evenly spaced on a plane at right angles to the axis of rotation of the female element, where $n$ is an integral multiple of four, any number of or all of said stations being the site for an arcuate concave groove disposed radially about and on median lines of an internal surface of a part sphere, which grooves constitute said movement-limiting means and wherein said meshing elements are balls partly recessed in said arcuate concave grooves, said male element being in the form of a part-sphere incorporating said circumferential wavy groove, said balls constituting said meshing elements being partly recessed in said circumferential wavy groove, said male and female elements rotating differentially and at relatively inclined but intersecting axes, the number of waves on said circumferential wavy groove being $(n+1)$, whereby said balls are caused to precess around said circumferential wavy groove, thereby creating a predetermined fixed ratio for said differential rotation.

60. A device according to claim 59, wherein said circumferential wavy groove has ben generated from a moving point on the part-spherical surface of said male element, said moving point being a tangent to a median line of said part-spherical surface at all times.

61. A device according to either claim 59 or claim 60 and wherein said meshing means in the form of a plurality of said balls are disposed in individual circumferentially disposed slots in a circular cage, the cage being a second movement-limiting means disposed between said female element and said male element.

62. A device according to claim 61, wherein said second movement-limiting means maintains said meshing elements on the path of a median line.

63. A device according to claim 62 wherein the second movement-limiting means swashes in a plane through the intersecting axes of the male and female element.

64. A device according to claim 62 wherein said second movement-limiting means swashes in a plane bisecting the angle between the intersecting axes of the male and female elements.

65. A device according to either claim 63 or claim 64 wherein means are provided for controlling said second movement-limiting means to hold said balls in said plane.

66. A device as claimed in any of claims 59 to 65 and having $n$ meshing elements.

67. A device as claimed in any of claims 57 to 66 wherein there are a plurality of circumferential wavy grooves, being asymmetrically disposed about said male element, but where the waves of each circumferential wavy groove are circumferentially in phase with each other and having, for each wavy groove, a separate set of meshing elements.

68. A device as claimed in claim 67 wherein one circumferential wavy groove is symmetrically disposed and one or more circumferential wavy grooves are disposed asymmetrically about said male element.

69. A device as claimed in any of claims 57 to 68 in which there is a second circumferential wavy groove on said female element, said second circumferential wavy groove having a plurality of waves whose number is less by two than the number of the plurality of waves on said first circumferential wavy groove, said number of waves being odd in each case, the number of waves on the female element being $(n-1)$ and on the male element being $(n+1)$ where $n$ is an integral multiple of four, said second circumferential wavy groove now constituting said first movement-limiting means, said meshing elements now precessing both in said first circumferential wavy groove and in said second circumferential wavy groove, but at different relative radial speeds with respect to the female element and the male element.

70. A device as claimed in claim 69 and having $n$ meshing elements.

71. A device as claimed in any of claims 60 to 66, wherein said second movement-limiting means consists of two circular parallel rails whose correct axial disposition to each other is maintained by a plurality of separate connector bridges which pass above or below the path of the said meshing elements so that said meshing elements may precess about said second movement-limiting means.

72. A device as claimed in any of claims 56 to 71 and in which said meshing elements are balls and wherein said balls can move radially inward or radially outward from the geometric swash centre of their swashing motion under controlled conditions and by predetermined amounts, as said balls precess about said circumferential wavy groove, to equate the surface distances that the balls are in rolling contact with said male and female elements whilst still maintaining their path along said bisected angle.

73. A motion transmitting assembly comprising a motion transmitting device as claimed in any of the preceding claims and coupled to a second similar motion transmitting device of equal but opposite ratio to make the output speed of the second device equal to the input speed of the first device.

74. A motion transmitting assembly comprising a motion transmitting device as claimed in any of claims 1 to 72 and coupled to a second similar motion transmitting device to multiply or to divide the torque ratios.

75. A motion transmitting assembly as claimed in either claim 73 or claim 74 wherein the two motion transmitting devices are arranged to provide an output from the second device about an axis parallel to the input axis to the first device.

76. A motion transmitting assembly as claimed in either claim 73 or claim 74 wherein the two motion transmitting devices are arranged to provide an output from the second device about an axis different from the input axis to the first device.

77.   A motion transmitting device comprising a first and a second axial wave drive unit, each being a motion transmitting device as claimed in any of claims 1 to 72, said seoond axial wave drive unit being arranged to bring the drive from the swashing element of the first axial wave drive unit to a rotatable output element.

78.   A motion transmitting device as claimed in claim 77 wherein the rotatable output element is aligned with an input element to the first axial wave drive unit.

79.   A motion transmitting device as claimed in either claim 77 or claim 78 wherein the torque changing ratios of the two axial wave drive units are combined to give a higher ratio than the individual ratios.

80.   A motion transmitting device as claimed in either claim 77 or claim 78 wherein the torque changing ratios of the two axial drive units are

-119-

combined to give a lower ratio.

81. A motion transmitting device as claimed in any of claims 77 to 81 wherein the two axial wave drive units, which have a common male/female element, the common element constituting the female element for the inner unit and having meshing elements engaging a male element of the inner unit, the common element constituting also the male of an outer unit and having separate meshing elements engaging in a female of the outer unit.

82. A motion transmitting device comprising

(a) an input, an output and datum means, one of which is a first shaft, another of which is a second shaft and a third of which is a frame, said first and second shafts being separately relatively rotatable with respect to the frame;

(b) a first axial wave drive unit having a male member and a female member, at least one of which members is angularly movable about orthogonal axes which are orthogonal to and intersecting said common axis at a common centre;

(c) one of said male and female members of said first axial wave drive unit being coupled to the first shaft by first coupling means and the other of said male and female members being either the frame or coupled to a second axial wave drive unit by second coupling means;

(d) the coupling means for the or each of said male and female members of the first axial wave drive unit which is angularly movable about orthogonal axes including swashing means;

(e) a plurality of meshing elements between the male and female members, said meshing elements being located on one of said members by a circumferential guide having waves, the number of waves being $(n - 1)$ or $(n + 1)$ where $n$ is an integral multiple of four, and said meshing elements being constrained by the other of said members to be each at any or all of the respective ones of a plurality of locations;

(f) said locations (i) being points arcuately spaced $\frac{360}{n}$ degrees apart on a part-spherical surface around said common centre, or (ii) being guides along arcs of median lines with a part-spherical surface about said common centre, which median lines pass through said points, or (iii) being wavy circumferential guides of the same wave amplitude as the waves of said one member with the median lines of the waves passing through said points, each wavy circumferential guide extending around a part-spheroid of said other member, the number of waves around the circumference being $(n + 1)$ or $(n - 1)$ according as the number of waves on said one member is $(n - 1)$ or $(n + 1)$ so as thereby to differ by two therefrom, whereby the meshing elements form a coupling between the male and female members causing one to precess relative to the other with simultaneous relative swashing motion;

(g) the second axial wave drive unit being concentric with the first axial wave drive unit.

83. An axial wave drive unit as claimed in any of claims 1 to 76 wherein the swashing means has a cranked input (or output) drive to the swashing plate means constituted by a bearing stud extending at an angle at the end of a crank of the crank drive, this angle being equal to the angle of swash and the stud drivingly engaging the swash plate means.

84. An axial wave drive unit as claimed in claim 83 wherein the stud is recessed into a hole in the swash plate means.

85. An axial wave drive unit as claimed in either claim 83 or 84 wherein the swash plate means is part-spherical.

86. A device according to any of the previous claims having one circumferential wavy groove and having independently movable meshing elements, wherein the locus of said circumferential wavy groove being generated from the path of a spheroidal sine wave.

87. A device according to claim 86 wherein the peaks of the sine wave have been removed.

88. A device according to claim 26 wherein said first movement-limiting means is said second circumferential wavy groove its locus also being generated from the path of a spheroidal sine wave.

89. A device according to claim 26 wherein the circumferential wavy groove constituting said first movement-limiting means is generated from the path of a spheroidal sine wave.

90. A motion transmitting device including

(a) meshing means in the form of first and second groups of a series of independently movable meshing elements whose centres are constrained to remain, each of said groups, on the circumference of first and second swashing circles of swashing means, both of said swashing circles always swashing in the same plane the one with the other, relative to a first and second set of male and female elements, said male element of said first set and said female element of said second set being a common element,

(b) said first and second male elements each formed with a circumferential wavy groove or grooves, said groove or grooves being partially complementary to said meshing elements,

(c) a series of first and second individual movement-limiting means incorporated in said first and second female elements, whereby said first and second groups of said meshing elements are caused to precess around said circumferential wavy grooves in said first and second male elements, wherein said first male and female elements swash and rotate relative to each other at different speeds and at different axes as do also said second male and female elements, each of said individual movement-limiting means guiding in captive dependency always the same individual meshing element within specific limits of arcuate oscillating motion relative to said first and second female elements, said arcuate oscillating motion of the centres of said individual meshing elements being in three degrees of freedom of linear motion relative to said first and second male elements,

(d)  said first female element being a datum means,

(e)  said common element being a swash plate means,

(f)  said swashing means being in the form of a first shaft which causes swash plate means to swash and thereby causing said meshing elements to precess around said first and second circumferential wavy grooves causing differing rotational speeds between the said swash plate, the datum means and the second male element,

(g)  said second male element being attached to a second shaft, said first and second shafts being coincident, said first shaft being the input, said second shaft being the output.

91. A motion transmitting device including

(a) meshing means in the form of first and second groups of a series of independently movable meshing elements whose centres are constrained to remain, each of said groups, on the circumference of first and second swashing circles of swashing means, arranged for swashing in two different planes the one from the other, said two different planes always being disposed at the same angle to each other, said planes bisecting each other and intersecting at the common centre of a first and second set of male and female elements, said male element of said first set and said female element of said second set being a common element,

(b) said first and second male elements both being formed with a circumferential wavy groove or grooves, said groove or grooves being partially complementary to said meshing elements,

(c) a series of first and second individual movement-limiting means incorporated in said first and second female elements, whereby said first and second groups of said meshing elements are caused to precesss around said circumferential wavy grooves in said first and second male elements, wherein said first male and female elements rotate relative to each other at different speeds and at different axes as do also said second male and female elements, each of said individual movement-limiting means guiding in captive dependency always the same individual meshing element within specific limits of arcuate oscillating motion relative to said first and second female elements, said arcuate oscillating motion of the centres of said individual meshing elements being in three degrees of freedom of linear motion relative to said first and second male elements, a first shaft being attached to said first female element, a second shaft being attached to said second male element, said first female element and said first shaft and said second male element and said second shaft having relatively inclined but intersecting axes thereby causing the said precession of said meshing elements around said circumferential wavy groove or grooves, thereby creating a predetermined, fixed ratio for said relative rotation, said relative inclination being the sum of the angle at which the two said swashing circles are disposed to eath other and of the respective angles of swash of said first circle to said first female element and said second circle to said second male element.

92. A motion transmitting device according to claim 91 wherein the axes of said first and said second shafts are swingable relative to each other about a common axis through the intersection point of the axes of said first and second shafts thus causing a compound rotation about said common axis and about the axes of said shafts of the two groups of said meshing elements relative to each other, the said first and second female elements relative to each other and the said first and second male elements relative to each other, thereby creating an infinitely variable component angle as the planes of swash of the two groups of meshing elements which bisect each other rotate about each other and about said first female element and said second male element from a maximum deflection angle of said first and second shafts where all the angles of said planes of swash are added to each other, to a minimum deflection angle at which said planes of swash subtract from one another and cancel each other out thereby causing the axes of said first and second shafts to be coincident.

93. A device according to claim 90 but wherein said first female element is attached to a third shaft, and wherein means are provided for selecting any one of said first, second and third shafts as the input shaft and one of the other two shafts as the output shaft and wherein the remaining shaft is clutched to a stator member thereby obtaining any one of six speed ratios.

94. A device according to claim 90 but wherein said first female element is attached to a third shaft, any one shaft being the input, the other two shafts being the outputs thereby producing a torque divider.

95. A device according to claim 94 with selector means for selecting any one of the shafts as the input shaft whereby three different pairs of output speed ratios are obtainable.

96. A motion transmitting device including

(a) meshing means in the form of first and second groups of a series of independently movable meshing elements whose centres are constrained to remain, each of said groups, on the circumference of first and second swashing circles, both of said swashing cirlces always swashing in the same plane the one with the other relative to a first and second set of male and female elements, said male element of said first set and said female element of said second set being a common element,

(b) said first and second male elements both formed with a circumferential wavy groove, said grooves being partially complimentary to said meshing elements,

(c) a series of first and second individual movement-limiting means incorporated in said first and second female elements whereby said first and second groups of said meshing elements are caused to precess around said circumferential wave grooves in said first and second male elements, wherein said first male and female elements swash and rotate relative to each other at different speeds and at different axes as do also said second male and female elements, each of said individual movement-limiting means guiding in captive dependency always the same individual meshing element within specific limits of arcuate oscillating motion relative to said first and second female elements, said arcuate oscillating motion of the centres of said individual meshing elements being in three degrees of freedom of linear motion relative to said first and second male elements,

(d) said second male emement being connected to an input shaft and said first female element being connected to an output shaft, the axes of said input and output shafts being coincident, said common element rotating and swashing, thereby causing a change of speed between said input and output shafts.

97. A motion transmitting device according to claim 92 but wherein is also incorporated swashing means which can rotate concentrically with said second shaft, and can be clutched to a stator at any predetermined rotational position, said swashing means acting on the face of said common element such that when said swashing means is not clutched and the axes of said first and second shafts are coincident with each other the swashing means is free to rotate thereby allowing the said common element to swash and rotate relative to these axes intersecting at a common point thereby producing a second speed ratio to that when the swashing means is clutched.

98. A motion transmitting device according to claims 90 to 97 in which the meshing elements are balls.

99. A motion transmitting device according to claims 90 to 98 wherein there is a second movement-limiting means in the form of a circular cage with slots for the balls.

100. A motion transmitting device according to any of claims 90 to 99 wherein said first movement-limiting means is a circumferential wavy groove having two more waves than said first circumferential wavy groove the number of waves being odd.

101. A motion transmitting device according to any of claims 90 to 100 in which the crests of the waves are cropped.

FIG. 1A.

FIG. 1B.

21/24

FIG. 2.

FIG.2A.

FIG.2B.

FIG. 2.

FIG. 2c.

FIG.3.

FIG. 4.

0048593

FIG. 5.

7/24

0048593

FIG. 6.

FIG. 7.

FIG.8.

FIG.9.

FIG. 10.

FIG. 11.

# FIG. 12.

FIG. 13.

401

405   404

409

407

402

403

408   406

FIG. 14.

421

424

422

423

428

424'

429

426'

427

FIG. 15.

FIG. 16.

FIG. 17.

FIG. 18.

FIG. 19.

# FIG. 20.

FIG. 21.

# FIG. 22.

FIG. 23.

FIG. 24.

643  641

640

638

639
636

635

642

637

631

632

633

634

644

23/24

0048593

FIG. 25.

24/24

0048593

| European Patent Office | **EUROPEAN SEARCH REPORT** | Application number<br>**EP 81 30 4263** |
| --- | --- | --- |

| DOCUMENTS CONSIDERED TO BE RELEVANT | | | CLASSIFICATION OF THE APPLICATION (Int Cl.³) |
| --- | --- | --- | --- |
| Category | Citation of document with indication, where appropriate, of relevant passages | Relevant to claim | **F 16 H 25/06** |
| X | GB - A - 328 907 (VALLANCE)<br>* Entire document * | 1-105 | |
| | -- | | |
| | FR - A - 2 308 024 (BALCKE-DURR)<br>* Page 1, lines 20-26; figure 13 * | 1-105 | |
| | -- | | |
| AD | US - A - 4 194 415 (KENNIGTON) | 1 | |
| AD | FR - A - 2 280 837 (KENNIGTON)<br>& US - A - 4 023 440 | 1 | TECHNICAL FIELDS SEARCHED (Int. Cl.³) |
| AD | US - A - 2 559 093 (RZEPPA) | 1 | **F 16 H** |
| AD | GB - A - 2 072 794 (J.C. CARDEN) | 1 | |
| | ----- | | |

CATEGORY OF CITED DOCUMENTS

X: particularly relevant
A: technological background
O: non-written disclosure
P. intermediate document
T· theory or principle underlying the invention
E. conflicting application
D document cited in the application
L· citation for other reasons

&· member of the same patent family corresponding document

| | The present search report has been drawn up for all claims | | |
| --- | --- | --- | --- |
| Place of search<br>The Hague | Date of completion of the search<br>02-12-1981 | Examiner<br>BEERNAERT | |